# EUROPEAN PATENT APPLICATION

(11) **EP 4 542 049 A1**
(43) Date of publication of application: **23.04.2025**
(21) Application number: 23888153.6
(22) Date of filing: 19.12.2023
(51) Int. Cl.: F04D 25/08, F04D 25/16, F04D 29/42, F04D 29/44, F04D 29/62, F04D 27/00, H02P 29/00, H02P 29/024, H02P 29/032, H02H 9/04, H02P 6/182, H02H 7/085, H02J 7/00

(54) **FAN, CONTROL CIRCUIT OF NECK FAN, AND ELECTRIC MOTOR DRIVE CIRCUIT OF PORTABLE FAN**

(30) Priority: 19.12.2022 CN 202223413732 U; 24.07.2023 CN 202321965090 U; 24.07.2023 CN 202321961287 U; 24.07.2023 CN 202321972292 U
(71) Applicant: Shenzhen Jisu Technology Co., Ltd, Shenzhen, Guangdong 518129 (CN)
(72) Inventor: ZHENG, Guanzheng, Shenzhen, Guangdong 518129 (CN); LI, Xiangfu, Shenzhen, Guangdong 518129 (CN); GAO, Haijun, Shenzhen, Guangdong 518129 (CN); XIE, Jiahang, Shenzhen, Guangdong 518129 (CN)
(74) Representative: Herrero & Asociados, S.L.
(86) International application number: PCT/CN2023/139668
(87) International publication number: WO 2024/099468

(57) **Abstract**

A fan includes: a neck housing, including a connection section and two neck side sections respectively connected to two sides of the connection section. The connection section and the two neck side sections cooperatively define a neck space; each of the connection section and/or at least one of the two neck side sections is arranged with a respective one airflow portion; the airflow portion is configured to blow an airflow towards the neck space.

## Description

### TECHNICAL FIELD

The present disclosure relates to the field of fans, and in particular to a fan, a control circuit of a neck fan, and a motor drive circuit of a portable fan.

### BACKGROUND

An electric fan for short, also known as a fan or an air blower, is household appliance in which a motor is arranged to drive fan blades to rotate to enable the air to circulate at higher speeds. The fan is substantially used for cooling in summer and is widely used in homes, classrooms, offices, shops, hospitals, hotels, and so on. Fans currently on the market can be classified in two categories: household fans and industrial air blowers. The household fans include: hanging fans, desk fans, floor fans, wall fans, ceiling fans, ventilation fans, rotary fans, air conditioning fans and so on.

However, small-sized fans in the art, when being used, need to be held by hand, and the hand that is holding the fan cannot perform other operations at the same time, and therefore, usage experience is poor.

### SUMMARY OF THE DISCLOSURE

Therefore, the present disclose provides a fan, including: a neck housing, including a connection section and two neck side sections respectively connected to two sides of the connection section. The connection section and the two neck side sections cooperatively define a neck space; each of the connection section and/or at least one of the two neck side sections is arranged with a respective one airflow portion; the airflow portion is configured to blow an airflow towards the neck space.

### BRIEF DESCRIPTION OF THE DRAWINGS

The present disclosure will be illustrates based on embodiments by referring to the accompanying drawings. The accompanying drawings of the present disclosure are used only to describe the embodiments. Any ordinary skilled person in the art may easily obtain other embodiments based on the described operations without deviating from the principles of the present disclosure.

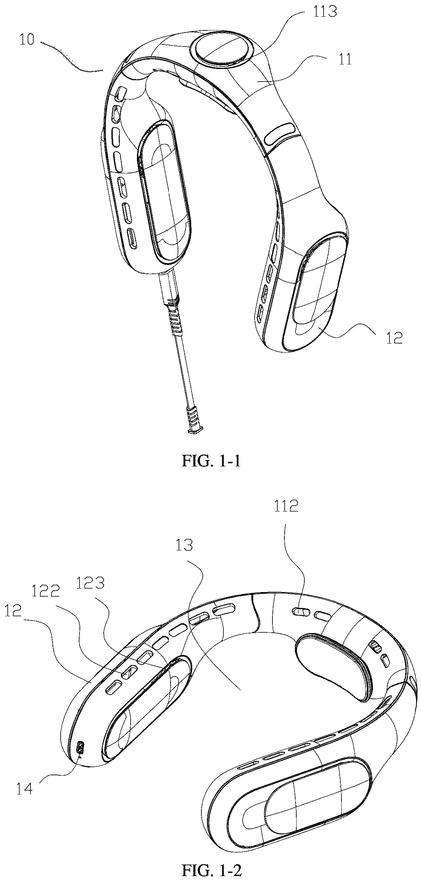

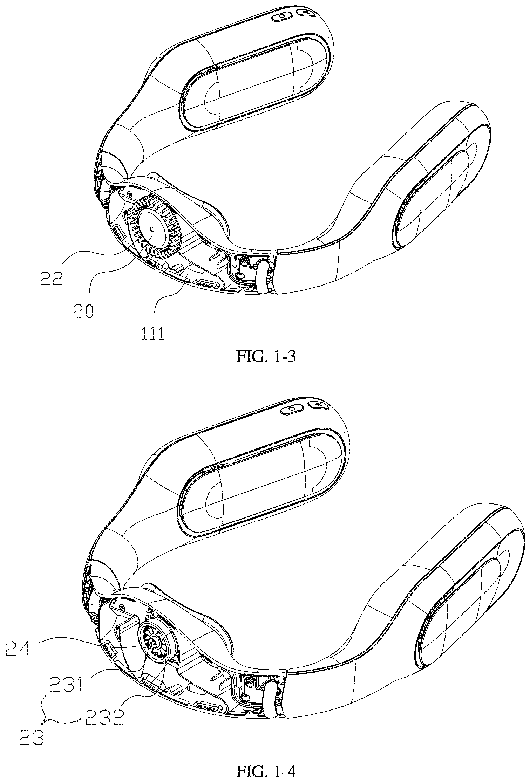

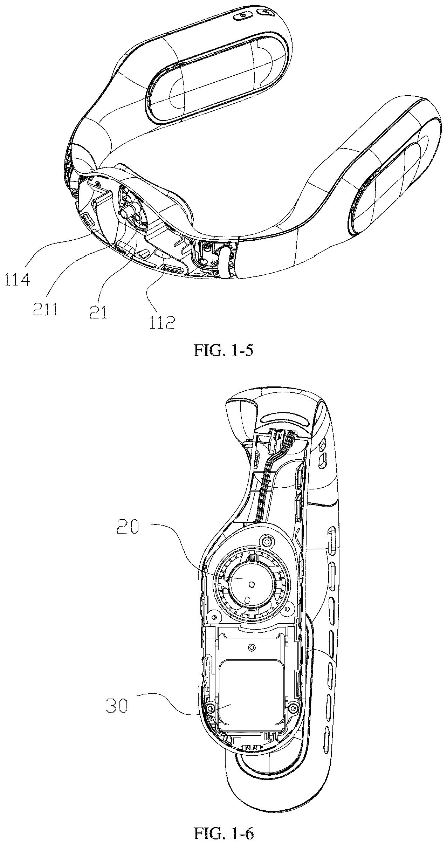

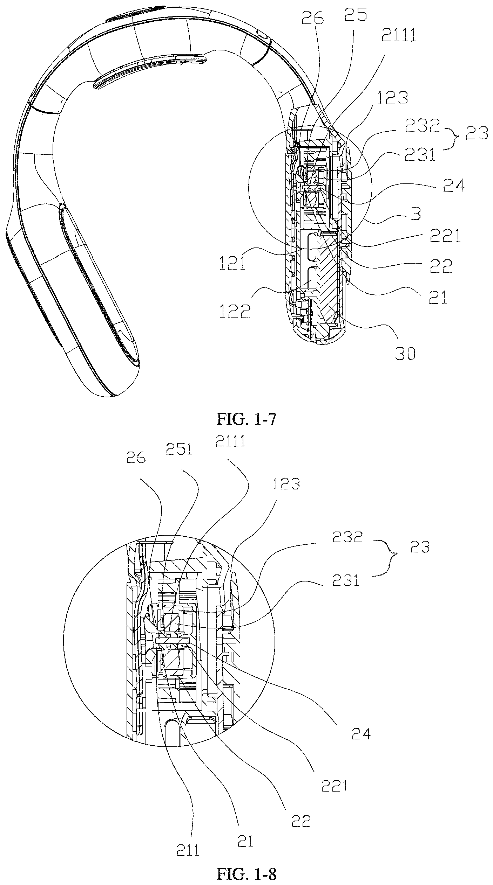

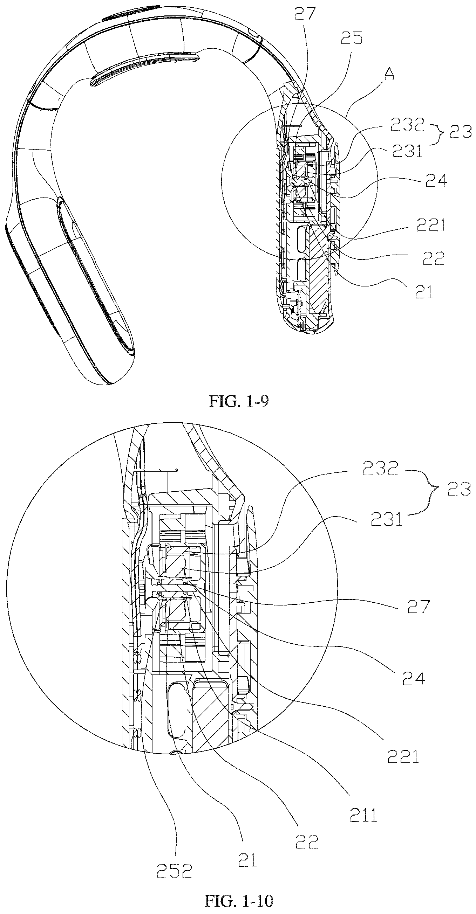

FIG. 1-1 is a structural schematic view of a fan according to embodiments of the present disclosure.
FIG. 1-2 is a structural schematic view of the fan, being viewed from another viewing angle, according to embodiments of the present disclosure.
FIG. 1-3 is a structural schematic view of the fan, having partial components omitted, according to embodiments of the present disclosure.
FIG. 1-4 is a structural schematic view of the fan, having partial components omitted, according to embodiments of the present disclosure.
FIG. 1-5 is a structural schematic view of the fan, having partial components omitted, according to embodiments of the present disclosure.
FIG. 1-6 is a structural schematic view of the fan, having partial components omitted, according to embodiments of the present disclosure.
FIG. 1-7 is a cross-sectional view of a portion of the fan according to embodiments of the present disclosure.
FIG. 1-8 is an enlarged view of a portion B in FIG. 1-7.
FIG. 1-9 is a cross-sectional view of a portion of the fan according to another embodiment of the present disclosure.
FIG. 1-10 is an enlarged view of a portion A in FIG. 1-9.
FIG. 2-1 is a structural schematic view of a neck fan according to embodiments of the present disclosure.
FIG. 2-2 is a cross-sectional view of the neck fan shown in FIG. 2-1.

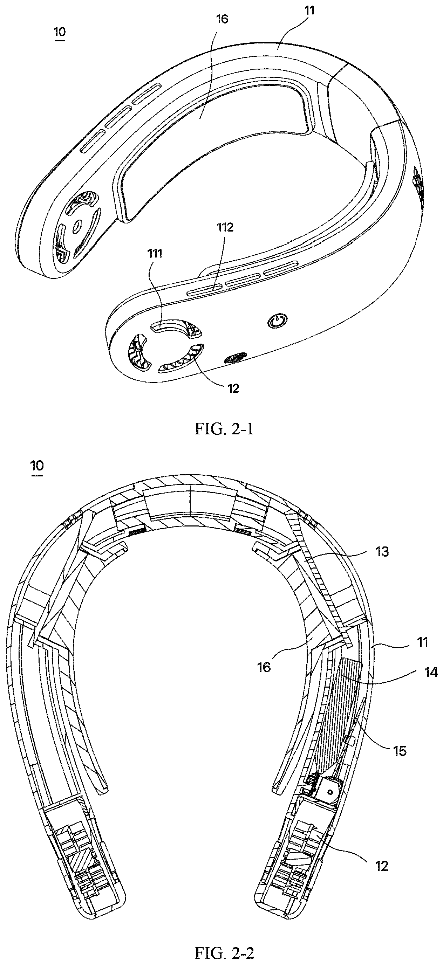

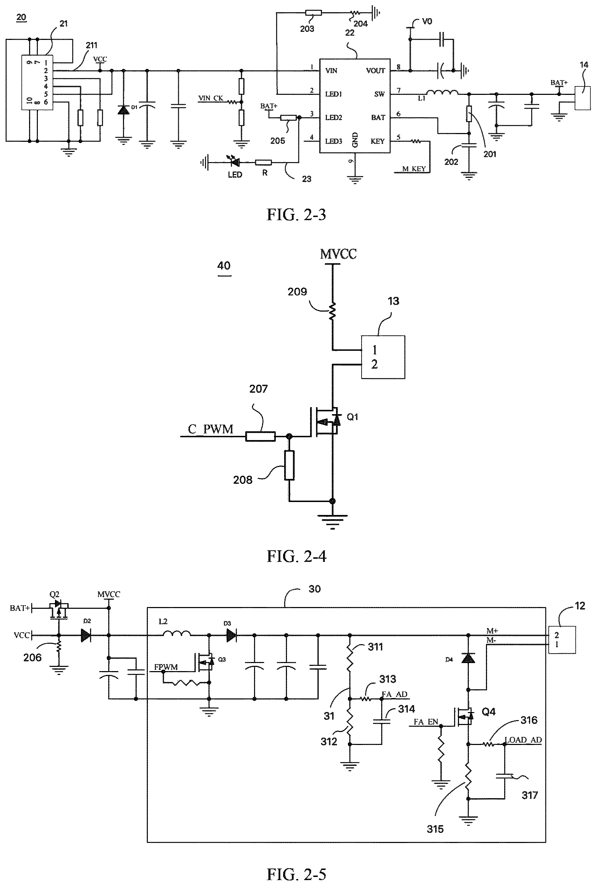

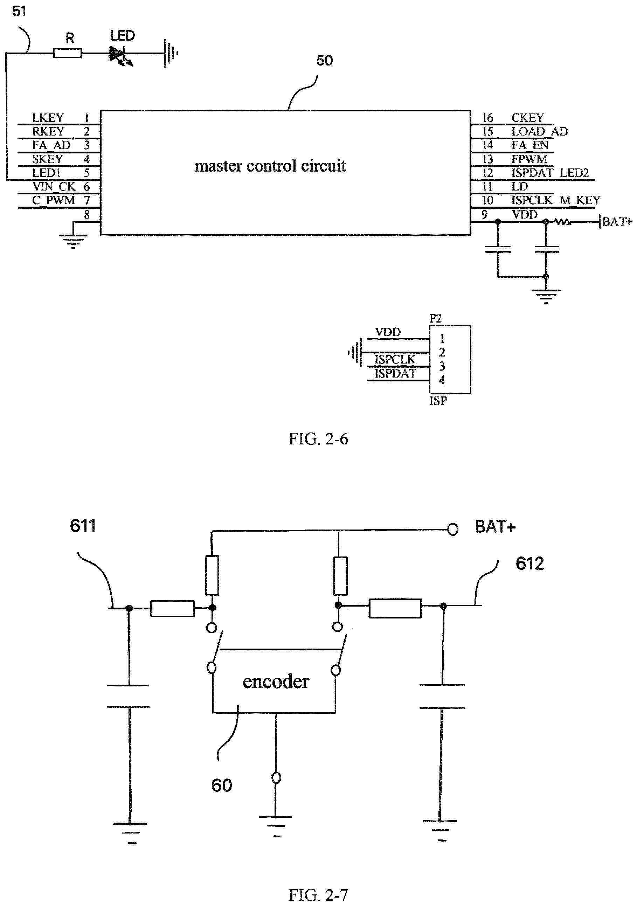

FIG. 2-3 is a circuit diagram of a charging and power supply circuit of a control circuit of the neck fan shown in FIG. 2-1.
FIG. 2-4 is a circuit diagram of a refrigeration control circuit of the control circuit of the neck fan shown in FIG. 2-1.
FIG. 2-5 is a circuit diagram of a fan drive circuit of the control circuit of the neck fan shown in FIG. 2-1.
FIG. 2-6 is a circuit diagram of a master control circuit of the control circuit of the neck fan shown in FIG. 2-1.
FIG. 2-7 is a circuit diagram of an encoder circuit of the control circuit of the neck fan shown in FIG. 2-1.

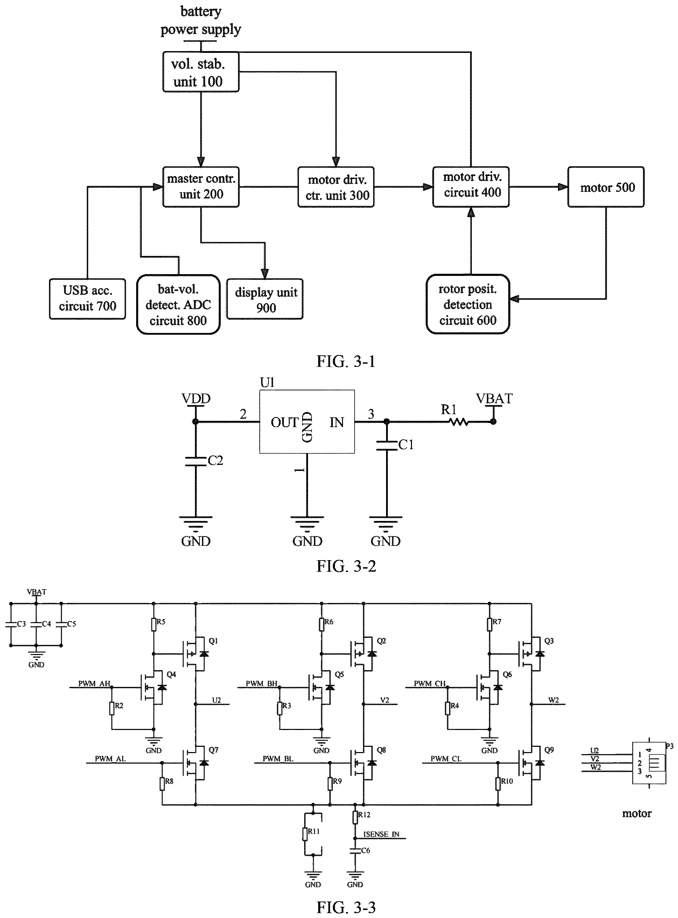

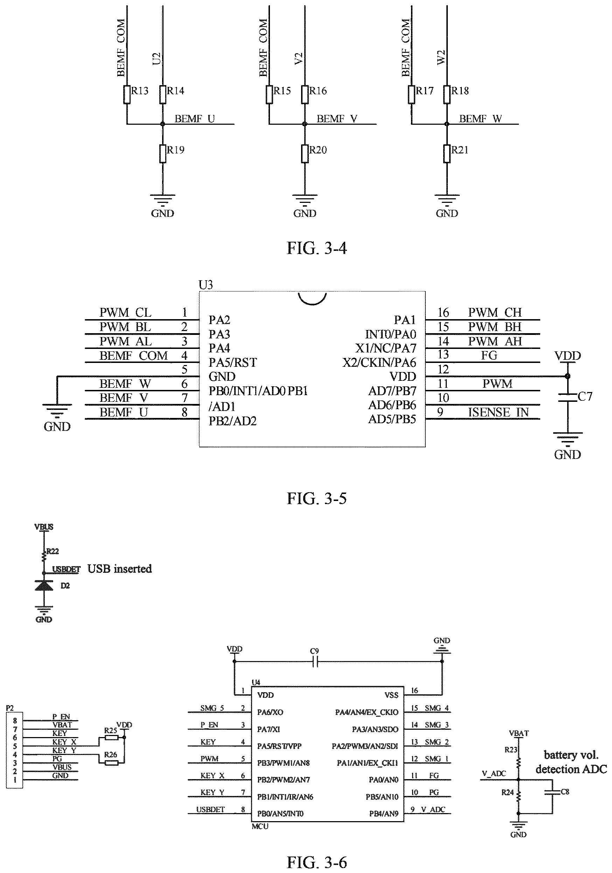

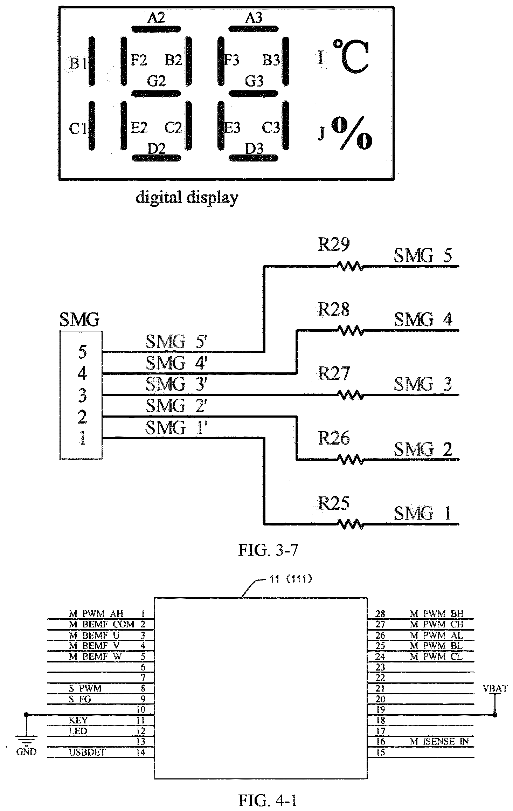

FIG. 3-1 is a block diagram of a motor drive control circuit of a portable fan according to embodiments of the present disclosure.
FIG. 3-2 is a circuit diagram of a voltage stabilizing unit according to embodiments of the present disclosure.
FIG. 3-3 is a circuit diagram of a fan drive control circuit according to embodiments of the present disclosure.
FIG. 3-4 is a circuit diagram of a rotor position detection circuit according to embodiments of the present disclosure.
FIG. 3-5 is a circuit diagram of a fan drive control unit according to embodiments of the present disclosure.
FIG. 3-6 is a circuit diagram of a master control unit according to embodiments of the present disclosure.
FIG. 3-7 is a circuit diagram of a display unit according to embodiments of the present disclosure.

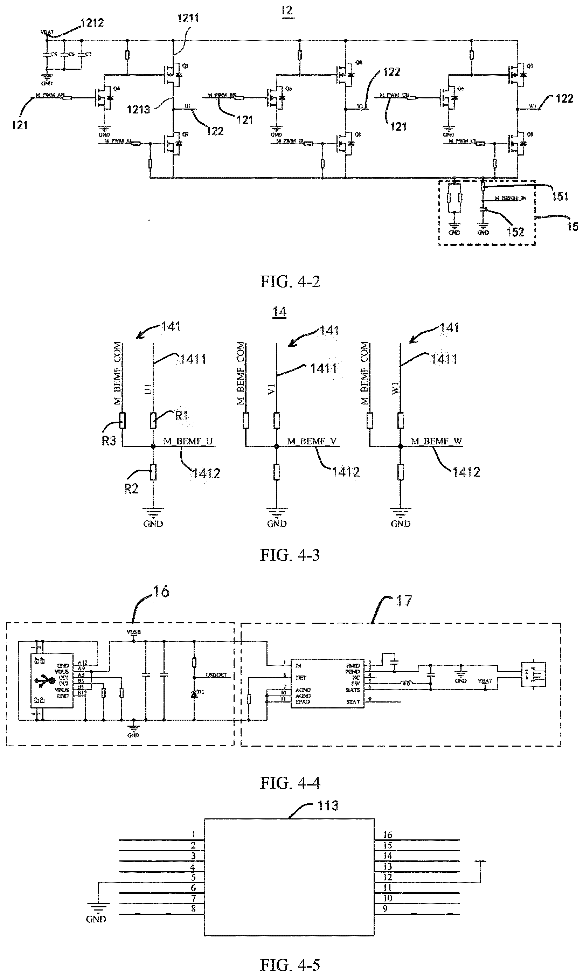

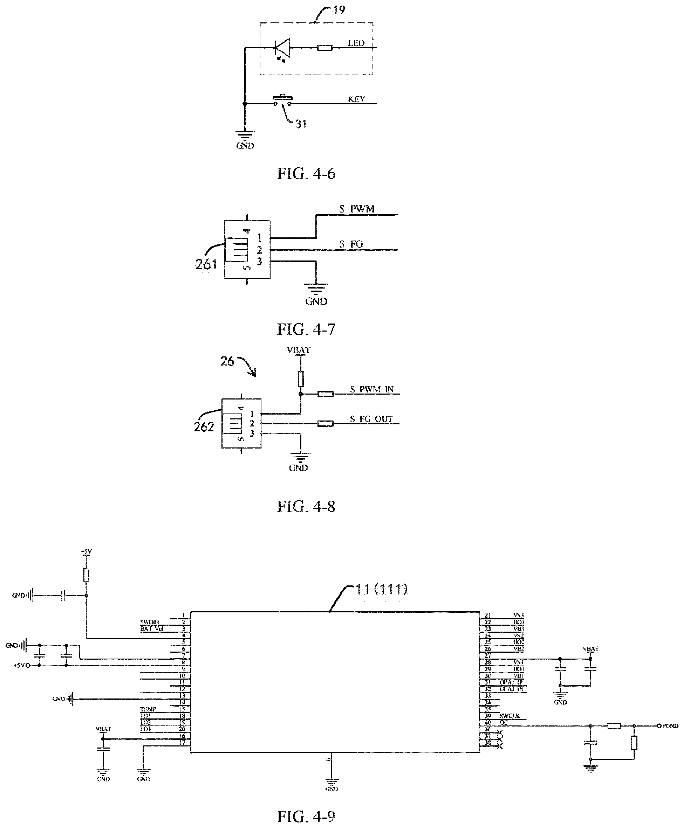

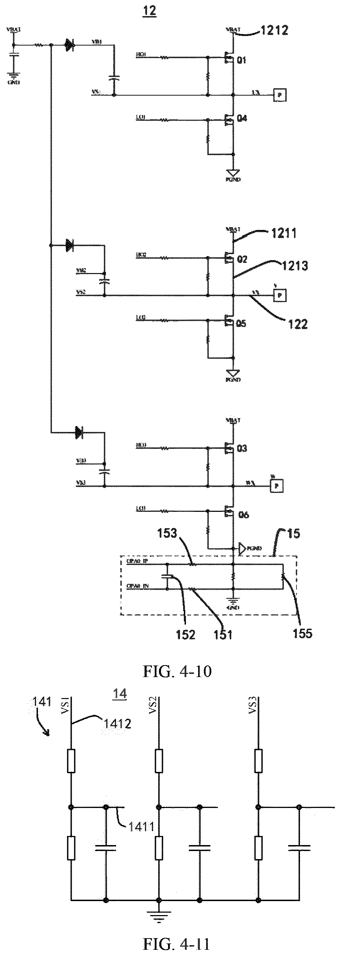

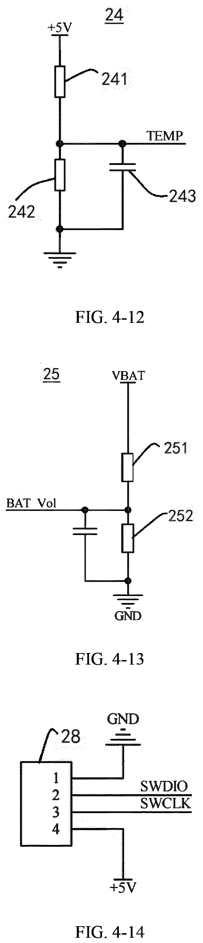

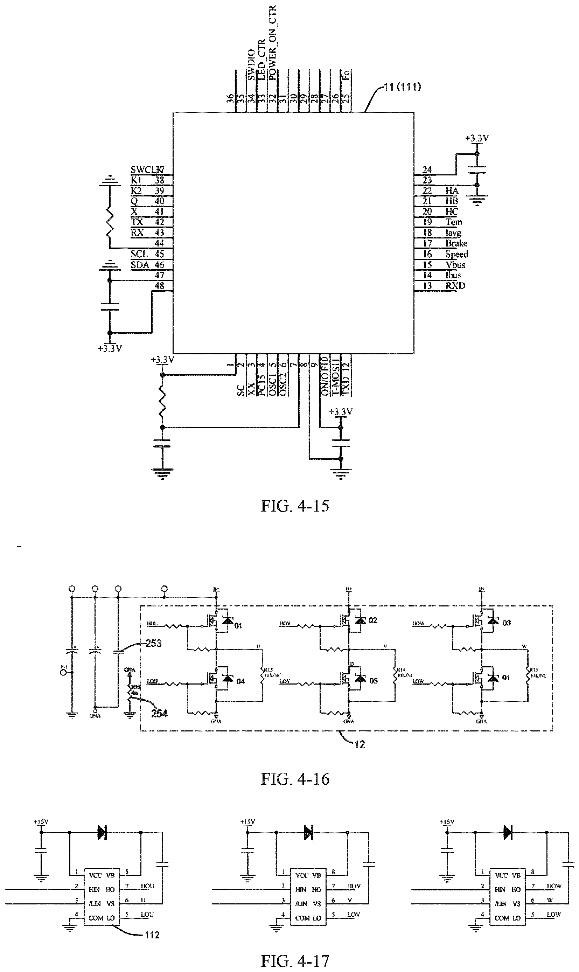

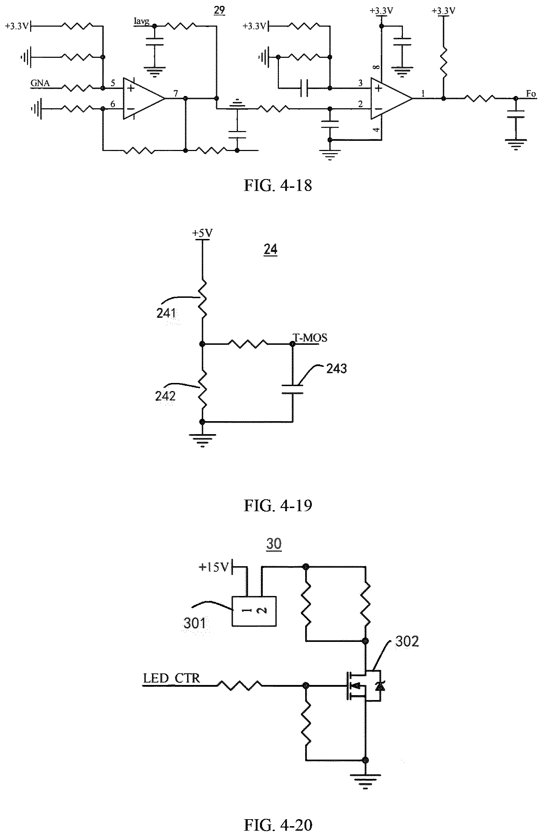

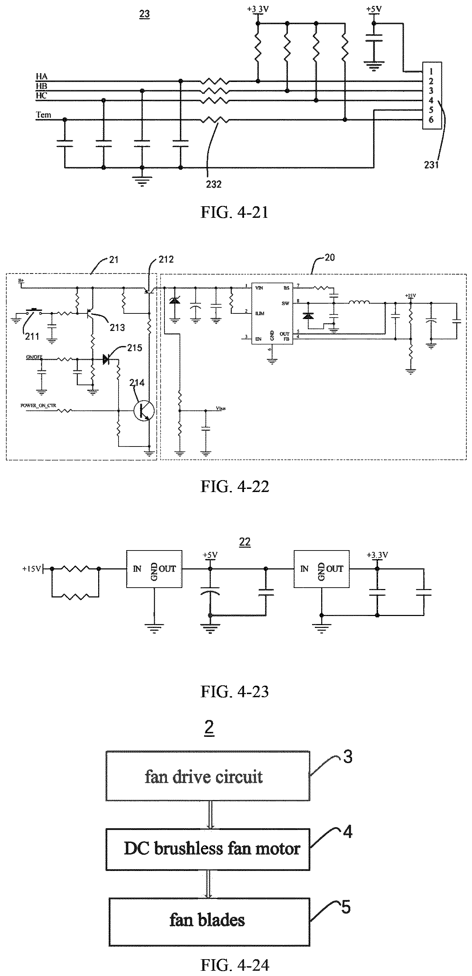

FIG. 4-1 is a circuit diagram of a master chip of a master control circuit of a fan drive circuit of the portable fan according to embodiments of the present disclosure.
FIG. 4-2 is a circuit diagram of a three-phase drive circuit and a current detection circuit of the fan drive circuit of the portable fan according to embodiments of the present disclosure.
FIG. 4-3 is a circuit diagram of an inverted-phase electric potential detection circuit of the fan drive circuit of the portable fan according to embodiments of the present disclosure.
FIG. 4-4 is a circuit diagram of an interface circuit and a charge management circuit of the fan drive circuit of the portable fan according to embodiments of the present disclosure.
FIG. 4-5 is a schematic view of an auxiliary chip of the master control circuit of the fan drive circuit of the portable fan according to embodiments of the present disclosure.
FIG. 4-6 is a circuit diagram of an indicator branch and a keypad of the fan drive circuit of the portable fan according to embodiments of the present disclosure.
FIG. 4-7 is a schematic view of a first speed regulating member of the fan drive circuit of the portable fan according to embodiments of the present disclosure.
FIG. 4-8 is a schematic view of a second speed regulating member of the fan drive circuit of the portable fan according to embodiments of the present disclosure.
FIG. 4-9 is a schematic view of the master control circuit of the fan drive circuit of the portable fan according to embodiments of the present disclosure.
FIG. 4-10 is a schematic view of the three-phase drive circuit and the current detection circuit of the fan drive circuit of the portable fan according to embodiments of the present disclosure.
FIG. 4-11 is a schematic view of the inverted-phase electric potential detection circuit of the fan drive circuit of the portable fan according to embodiments of the present disclosure.
FIG. 4-12 is a schematic view of a transistor temperature detection circuit of the fan drive circuit of the portable fan according to embodiments of the present disclosure.
FIG. 4-13 is a schematic view of a battery voltage detection circuit of the fan drive circuit of the portable fan according to embodiments of the present disclosure.
FIG. 4-14 is a schematic view of a burner interface of the fan drive circuit of the portable fan according to embodiments of the present disclosure.
FIG. 4-15 is a schematic view of the master chip of the master control circuit of the fan drive circuit of the portable fan according to embodiments of the present disclosure.
FIG. 4-16 is a schematic view of the three-phase drive circuit and the battery voltage detection circuit of the fan drive circuit of the portable fan according to embodiments of the present disclosure.
FIG. 4-17 is a schematic view of three three-phase control chips of the master control circuit of the fan drive circuit of the portable fan according to embodiments of the present disclosure.
FIG. 4-18 is a schematic view of a signal amplification circuit of the fan drive circuit of the portable fan according to embodiments of the present disclosure.
FIG. 4-19 is a schematic view of the transistor temperature detection circuit of the fan drive circuit of the portable fan according to embodiments of the present disclosure.
FIG. 4-20 is a schematic view of a light control circuit of the fan drive circuit of the portable fan according to embodiments of the present disclosure.
FIG. 4-21 is a schematic view of a Hall detection circuit of the fan drive circuit of the portable fan according to embodiments of the present disclosure.
FIG. 4-22 is a schematic view of a switch control circuit of the fan drive circuit of the portable fan according to embodiments of the present disclosure.
FIG. 4-23 is a schematic view of a direct current conversion circuit of the fan drive circuit of the portable fan according to embodiments of the present disclosure.
FIG. 4-24 is a schematic block view of the portable fan according to embodiments of the present disclosure.

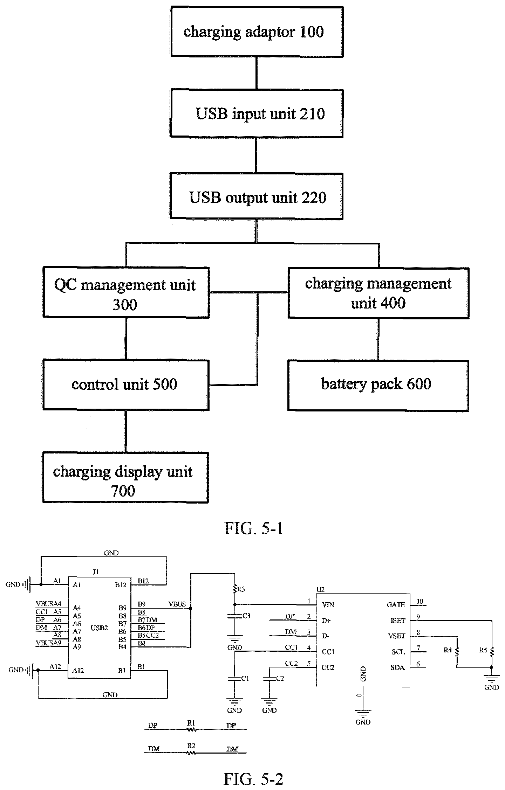

FIG. 5-1 is a circuit diagram of a charge management circuit of a portable fan according to embodiments of the present disclosure.
FIG. 5-2 is a circuit diagram of a USB interface and a quick-charging management unit according to embodiments of the present disclosure.

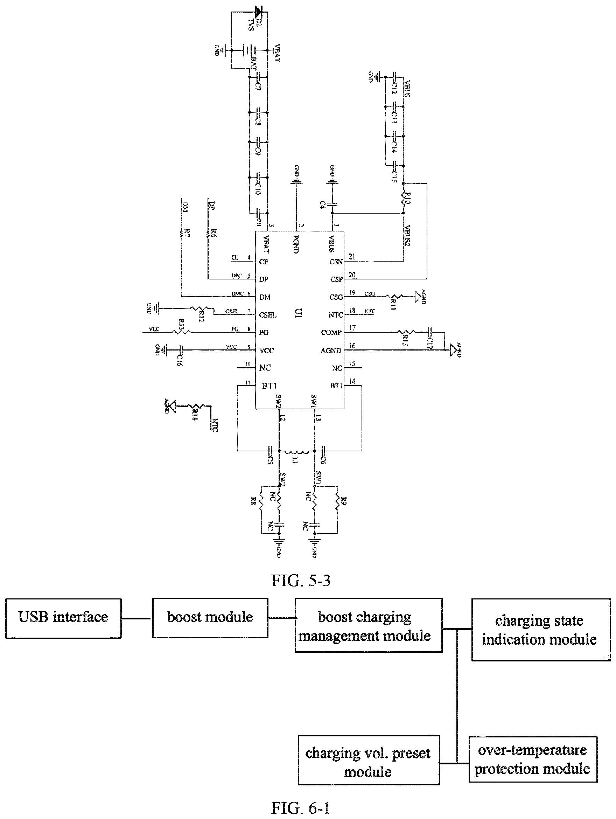

FIG. 5-3 is a circuit diagram of a charge management unit according to embodiments of the present disclosure.
FIG. 6-1 is a circuit diagram of a battery boost charging circuit of a portable fan according to embodiments of the present disclosure.

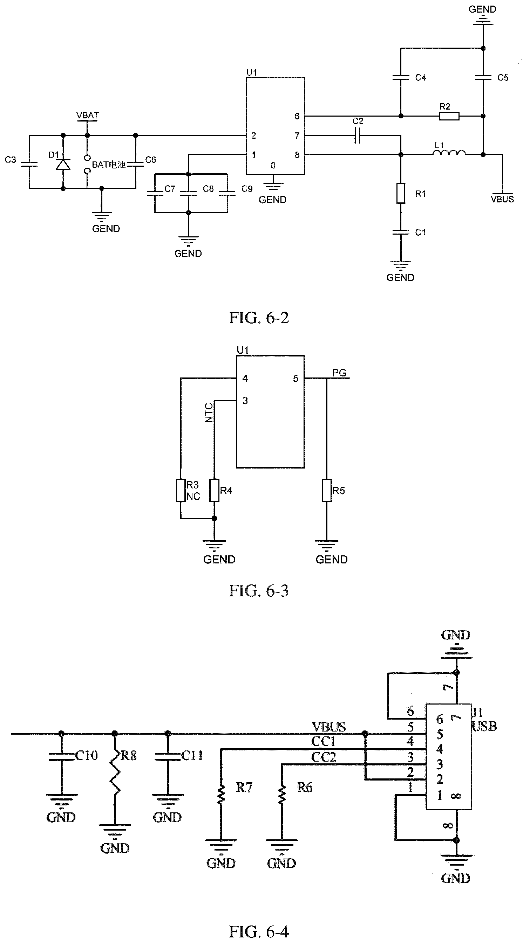

FIG. 6-2 is a circuit diagram of a boost module of the battery boost charging circuit of the portable fan according to embodiments of the present disclosure.
FIG. 6-3 is a schematic view of a charging voltage preset module, an over-temperature protection module, a charging state indication module of the battery boost charging circuit of the portable fan according to embodiments of the present disclosure.
FIG. 6-4 is a circuit diagram of a USB interface circuit of the battery boost charging circuit of the portable fan according to embodiments of the present disclosure.

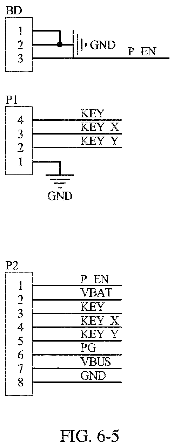

FIG. 6-5 is a circuit diagram of a signal transmission module of the battery boost charging circuit of the portable fan according to embodiments of the present disclosure.

### DETAILED DESCRIPTION

In order to make the technical problems, technical solutions and beneficial effects to be clearer and more understandable, the present disclosure is hereinafter described in further detail by referring to the accompanying drawings and embodiments. It is understood that the specific embodiments described herein are only for the purpose of explaining the present disclosure and shall not limit the present disclosure.

It should be noted that when an element is described as being "fixed to" or "arranged" on another element, the element may be directly or indirectly on the another element. When an element is described as being "connected" to another element, the element may be directly or indirectly connected to the another element. The embodiments and features of the embodiments in the present disclosure may be combined with each other without conflict. The present disclosure will be described in detail below by referring to the accompanying drawings and the embodiments.

It is to understand that the terms "length", "width", "upper", "lower", "front", "rear", "left", "right", "vertical ", "horizontal", "top", "bottom", "inside", "outside" and the like indicate orientations or positional relationships based on those shown in the accompanying drawings, and are used to facilitate and simplify description of the present disclosure. The terms are not intended to indicate or imply that a device or an element must have a specific orientation or must be constructed and operated in a specific orientation. Therefore, the terms shall not be interpreted as a limitation of the present disclosure.

Furthermore, the terms "first" and "second" are used only for descriptive purposes, and shall not be interpreted as indicating or implying relative importance or implicitly specifying the number of technical features indicated. Therefore, a feature defined by "first" and "second" may expressly or implicitly include one or more such features. In the description of this application, "a plurality of" means two or more, unless otherwise expressly and specifically limited.

A technical solution 1 is shown in FIG. 1-1 to 1-10.

As shown in FIGS. 1-1 to 1-10, the present disclosure provides a fan including: a neck housing 10. The housing 10 includes a connection section 11 and two neck side sections 12 respectively connected to two sides of the connection section 11. The connection section 11 and the two neck side sections 12 cooperatively define a neck space 13. The connection section 11 and/or at least one of the two neck side sections 12 are arranged with an airflow portion 20. Each airflow portion 20 is configured to blow an airflow towards the neck space 13. In the present embodiment, since the two neck side sections are arranged respectively on the two sides of the connection section 11, the connection section 11 and the two neck side sections 12 cooperatively define the neck space 13, enabling the user to put on the fan through the neck space 13, and two hand of the user can be effectively freed. In addition, since the connection section 11 and/or the at least one of the two neck side sections 12 are arranged with the airflow portion 20, the fan of the present embodiment can blow the airflow towards the neck space 13, enabling the user to have a better airflow cooling experience.

For portable fans in the art, a single-phase motor is arranged for driving, an airflow strength is less, and a cooling effect is poor. Therefore, a better user experience cannot be provided.

As shown in FIGS. 1-3 to 1-10, in order to solve the above problem, the airflow portion 20 of the present embodiment includes a positioning protruding post 21, rotation air blades 22 and a three-phase motor drive assembly 23 that is driveably connected to the rotation air blades 22. The three-phase motor drive assembly 23 includes a stator 231 and a rotor 232 sleeving an outside of the stator 231. The rotor 232 is fixedly mounted on the rotation air blades 22 and is coaxially arranged with the rotation air blades 22. The stator 231 fixedly sleeves the positioning protruding post 21. By arranging the three-phase motor drive assembly 23 to drive the rotation air blades 22 in the present embodiment, the airflow portion 20 is enabled to output a stronger airflow to the neck space 13, such that the user may have an improved cooling effect.

As shown in FIGS. 1-3 to 1-5, in an embodiment, the airflow portion 20 is arranged on the connection section 11. The connection section 11 defines a first air guiding cavity 111 therein. The connection section 11 defines a first air outlet 112 communicated with the first air guiding cavity 111. The first air outlet 112 faces towards the neck space 13. The positioning protruding post 21 is received in the first air guiding cavity 111. The rotation air blades 22 are rotatably received in the first air guiding cavity 111 and configured to blow the airflow to the first air outlet 112.

In an embodiment, the rotation air blades are blades of a radial flow fan.

As shown in FIGS. 1-1 to 1-5, in an embodiment, in order to enable the fan of the present embodiment to effectively blow the air into the neck space 13, the connection section 11 defines a first air inlet 113 communicated to the first air guiding cavity 111, and the first air inlet 113 faces towards an end of the rotation air blades 22. The first air outlet 112 faces towards a side of the rotation air blades 22. By defining the first air inlet 113 facing towards the end of the rotation air blades 22 and defining the first air outlet 112 facing towards the side of the rotation air blades 22, the fan can efficiently drive the external ambient air to flow towards the neck space 13, such that the user can obtain a better cooling effect.

As shown in FIGS. 1-7 to 1-10, in an embodiment, the rotation air blades 22 defines a fixation hole 221, and an axis of the fixation hole 221 coincides with an axis of the rotation air blades 22. The airflow portion 20 further includes a rotation shaft 24. A first end of the rotation shaft 24 is fixedly threaded into the fixation hole 221. A positioning protruding post 21 defines a positioning hole 211. An axis of the positioning hole 211 coincides with the axis of the rotation shaft 24. A second end of the rotation shaft 24 is rotatably received in the positioning hole 211.

As shown in FIGS. 1-3 to 1-5, in order to improve the cooling effect of the fan provided in the present embodiment, a plurality of first air guiding ribs 114 are arranged in the connection section 11, and the plurality of first air guiding ribs 114 cooperatively define the first air guiding cavity 111. A plurality of first air outlets 112 are defined. The plurality of first air outlets 112 are spaced apart from each other and are located along an extension direction of the connection section 11. An end of the first air guiding cavity 111 is communicated with the plurality of first air outlets 112. The plurality of first air outlets 112 are defined, the plurality of first air outlets 112 are spaced apart from each other and are located along the extension direction of the connection section 11, and the end of the first air guiding cavity 111 is communicated with the plurality of first air outlets 112. Therefore, the air in the air guiding cavity can be uniformly output, by the airflow portion 20, from the plurality of first air outlets 112 to the neck space 13, such that the cooling effect of the fan is improved.

As shown in FIGS. 1-7 to 1-10, since the rotation air blades 22 of the present embodiment are driven by the three-phase motor assembly having a higher rotational speed, in order to avoid sharp wear between the rotation shaft 24 and the positioning hole 211 due to the high-speed rotation and to ensure the service life of the fan, at least one airflow portion 20 includes a bearing portion 25. An outer ring of the bearing portion 25 is fixed in the positioning hole 211, and an inner ring of the bearing portion 25 sleeves the second end of the rotation shaft 24. Due to the outer ring of the bearing portion 25 being fixed in the positioning hole 211 and the inner ring of the bearing portion 25 sleeving the second end of the rotation shaft 24, the friction between the positioning hole 211 and the rotation shaft 24 can be converted from sliding friction to friction inside the bearing portion 25. In this way, wear and tear between the positioning hole 211 and the rotation shaft 24 can be effectively avoided, the service life of the airflow portion 20 of the present embodiment is extended.

As shown in FIGS. 1-7 and 1-8, in an embodiment, the bearing portion 25 includes a rolling bearing 251. The airflow portion 20 further includes a limiting member 26. The limiting member 26 is mounted on the second end of the rotation shaft 24. The bearing portion 25 is disposed between the limiting member 26 and the first end of the rotation shaft 24. A plurality of bearing portions 25 are arranged. An inner flange 2111 is arranged on an inner wall of the positioning hole 211, and the inner flange 2111 is disposed between two adjacent bearing portions 25, such that the two adjacent bearing portions 25 are spaced apart from each other. By arranging the limiting member 26 on the second end of the rotation shaft 24 and arranging the inner flange 2111 on an inner wall of the positioning hole 211, the inner ring and the outer ring of the rolling bearing 251 of the present embodiment can be effectively limited, such that the rolling bearing 251 can be effectively mounted.

In an embodiment, the airflow portion 20 of the present embodiment further includes an elastic member. The elastic member of the present embodiment is disposed between the rotation air blades 22 and the rolling bearing 251 near the rotation air blades 22 and sleeves the rotation shaft 24. Two ends of the elastic member of the present embodiment respectively abut against the inner ring of the rolling bearing 251 and the rotation air blades 22. In this way, an elastic force, in a direction away from the air outlet, is applied on the inner ring of the rolling bearing 251. Due to the elastic member of the present embodiment, the rolling bearing 251 can be preloaded, such that the service life of the rolling bearing 251 is extended.

In an embodiment, the bearing portion 25 of the present embodiment is a ball bearing, and the lubricating oil is arranged in the ball bearing.

In an embodiment, the bearing portion 25 of the present embodiment is a ceramic bearing, and the lubricating oil is arranged in the ceramic bearing.

In an embodiment, the bearing portion 25 of the present embodiment is a magnetic levitation bearing.

As shown in FIGS. 1-9 and 1-10, in another embodiment, the bearing portion 25 includes a slide bearing 252, and the airflow portion 20 further includes two sealing rings 27. The two sealing rings 27 both sleeve the rotation shaft 24 and are respectively located on two sides of the slide bearing 252. In the present embodiment, the slide bearing 252 between the rotation shaft 24 and the positioning hole 211, the inner ring of the slide bearing 252 is fixedly connected to the second end of the rotation shaft 24, and the outer ring is fixedly connected to the fixation hole 221. Therefore, the friction between the rotation shaft 24 and the positioning hole 211 can be converted into the friction between the inner ring and the outer ring of the slide bearing 252, wear and tear between the rotation shaft 24 and the positioning hole 211 is avoided, and the service life of the fan of the present embodiment is extended.

In an embodiment, the lubricate oil is arranged in the slide bearing 252. The sealing rings 27, which sleeve the rotation shaft 24 and are located on the two sides of the slide bearing 252 respectively, are configured to seal the lubricate oil.

As shown in FIGS. 1-6 to 1-10, in an embodiment, each of the two neck side sections 12 is arranged with one respective airflow portion 20. A second air guiding cavity 121 is defined in each neck side section 12. The neck side section 12 defines a second air outlet 122 communicated with the second air guiding cavity 121. The second air outlet 122 faces towards the neck space 13. The positioning protruding post 21 is received in the second air guiding cavity 121. The rotation air blades 22 are rotatably mounted in the second air guiding cavity 121 and are configured to blow the airflow to the second air outlet 122.

As shown in FIGS. 1-7 to 1-10, in an embodiment, the neck side section 12 defines a second air inlet 123 communicated to the second air guiding cavity 121. The second air inlet 123 faces an end of the rotation air blades 22, and the second air outlet 122 faces a side of the rotation air blades 22.

In an embodiment, a plurality of second air outlets 122 are defined. The plurality of first air outlets 122 are spaced apart from each other and are located along an extension direction of the neck side section 12.

In an embodiment, the airflow portion 20 is arranged in one of the two neck side sections 12, and the airflow portion 20 is arranged with the bearing portion 25.

In an embodiment, the airflow portion 20 is arranged in one of the connection section 11 and the two neck side sections 12, and the airflow portion 20 is arranged with the bearing portion 25.

In an embodiment, each of the connection section 11 and the two neck side sections 12 is arranged with one airflow portion 20 respectively, and the airflow portion 20 is arranged with the bearing portion 25.

As shown in FIG. 1-2 and FIG. 1-6, in order to enable the fan of the present embodiment to operate without being connected to any external power source, the fan further includes a power supply portion 30, arranged inside the housing 10. The power supply portion 30 is electrically connected to each airflow portion 20. The housing 10 is arranged with a charging port 14 that is electrically connected to the power supply portion 30. By arranging the power supply portion 30 in the housing 10 and enabling the power supply portion 30 to be electrically connected to each airflow portion 20, the fan of the present embodiment can blow the airflow without being connected to any external power source, such that application versatility of the fan of the present embodiment is improved. In addition, by arranging the charging port 14 in the housing 10 to be electrically connected to the power supply portion 30, the power supply portion 30 may be connected to the external power source through the charging port 14, such that the power supply section 30 can be charged.

In an embodiment, the power supply portion 30 of the present embodiment is a storage battery.

In an embodiment, at least one of the first air inlet and the first air outlet is arranged with a filter mesh. By arranging the filter mesh on at least one of the first air inlet and the first air outlet, debris in the external environment can be effectively avoided from entering the fan.

In an embodiment, at least one of the second air inlet and the second air outlet is arranged with a filter mesh. By arranging the filter mesh on at least one of the second air inlet and the second air outlet, debris in the external environment can be effectively avoided from entering the fan.

In an embodiment, the fan of the present embodiment further includes a gel receiving portion. The gel receiving portion is detachably arranged in the first air guiding cavity and/or the second air guiding cavity. The gel receiving portion of the present embodiment is configured to hold a gel-type aroma agent. By arranging the gel-type aroma agent inside the gel receiving portion, the airflow blown by the fan may have an aroma odour, and a better user experience is provided.

In an embodiment, the gel receiving portion of the present embodiment includes a box body and a cover plate covering on the box body. The box body is detachably mounted in a first air guiding cavity. The box body defines a receiving chamber to receive the gel-type aroma agent. The cover plate assembly includes a first cover plate and a second cover plate. The first cover plate is detachably mounted on the box body, and the second cover plate is pivoted to the first cover plate. The first cover plate has a first opening, and the second cover plate has a second opening. The second cover plate has a covering state in which the second cover plate covers the entire first opening and has an open state in which the first opening and the second opening coincide with each other. By rotating the second cover plate, the second cover plate can be switched between the covering state and the open state.

In summary, the fan of the present embodiment has at least the following beneficial technical effect. Two neck side sections are respectively arranged on the two sides of the connection section 11, such that the connection section 11 and the two neck side sections 12 cooperatively define the neck space 13, enabling the user to put on the fan through the neck space 13, and the hands of the user are freed. In addition, the airflow portion 20 is arranged in the connection section 11 and/or the at least one neck side section 12, such that airflow can be blown towards the neck space 13, a better cooling effect is provided.

A technical solution 2 is shown in FIGS. 2-1 to 2-7.

As shown in FIGS. 2-1-FIGS. 2-2, a neck fan 10 is provided and includes a housing 11, a fan 12, a refrigeration member 13, a battery 14, and a control module 15. The housing 11 defines an air inlet 111 and an air outlet 112. The fan 12, the battery 14, and the control module 15 are all arranged in the housing 11. The fan 12 is configured to direct air at the air inlet 111 to flow to reach the air outlet 112 to be blown out the housing. The refrigeration member 13 is arranged on the housing 11. The neck fan 10 may further include a temperature conducting member 16. A side of the temperature conducting member is configured to be disposed close to a neck of a user, and the other side of the temperature conducting member contacts the refrigeration member 13.

The control module 15 includes a control circuit, the control circuit may be arranged on a circuit board. Specifically, as shown in FIGS. 2-3 to 2-7, the control circuit may include a charging and power supply circuit 20, a fan drive circuit 30, a refrigeration control circuit 40 and a master control circuit 50.

The charging and power supply circuit 20 is configured to be electrically connected to an external power source and a battery 14 to receive an external voltage VCC to charge the battery 14 and to output a power supply voltage V0. The fan drive circuit 30 is electrically connected to the charging and power supply circuit 20 and the fan 12 to drive the fan 12 to rotate.

The refrigeration control circuit 40 is electrically connected to the refrigeration member 13 and the charging and power supply circuit 20 to drive the refrigeration member 13 generate coldness.

The refrigeration control circuit 40 includes a first control switch Q1. A first conductive end of the first control switch Q1 is configured to receive, via the refrigeration member 13, an output voltage from the battery 14 or receive the power supply voltage (the present embodiment is illustrated based on receiving the output voltage from the battery 14). A second conductive end of the first control switch Q1 is grounded.

The master control circuit 50 is electrically connected to the charging and power supply circuit 20, the fan drive circuit 30 and a control end of the first control switch Q1. The master control circuit 50 is configured to output a first pulse width control signal to control the first control switch Q1 to be conducted or disconnected, such that the refrigeration member 13 is controlled to be switched on and switched off intermittently. Specifically, a first pulse width signal output end C_PWM of the master control circuit 50 may be electrically connected to the control end of the first control switch Q1 to output the first pulse width control signal.

Compared to the art, in the control circuit of the neck fan of the present disclosure, the refrigeration control circuit 40 having the first control switch Q1 receives the first pulse width control signal output by the master control circuit 50 to control the refrigeration member 13 to be switched on and switched off intermittently. In this way, discomfort to the user, caused by an excessively low temperature when the fan being operating for a long period of time, can be avoided. The usage experience is improved. In addition, the refrigeration control circuit 40 has a simple structure, can be achieved easily, and is highly reliable.

In this embodiment, as shown in FIGS. 2-2, the charging and power supply circuit 20 includes a charging port 21 and a charging management chip 22. A power end 211 of the charging port 21 receives the external voltage VCC and is electrically connected to a charging input pin VIN of the charging management chip 22. A power end 211 of the charging port 21 is electrically connected to a negative electrode of a voltage stabilizing transistor D1, and a positive electrode of the voltage stabilizing transistor D1 is grounded. A switch pin SW of the charging management chip 22 is electrically connected to the positive electrode BAT+ of the battery 14 via a first inductor L1. A boost output pin VOUT of the charging management chip 22 is configured to output the power supply voltage V0. A boost input pin of the charging management chip 22 is connected to a node between the battery 14 and the first inductor L1 via a first connection resistor 201 and is further grounded via a first grounding capacitor 202. By arranging the charging management chip 22, the voltage stabilizing transistor D1 and the first inductor L1, the charging port and charging and discharging of the battery can be effectively managed, and the power supply voltage required by other circuits can be output. A simple circuit structure is provided and can be easily achieved to and highly safe.

A keypad input end KEY of the charging management chip 22 is electrically connected to the master control circuit 50. A first LED drive pin LED1 of the charging management chip 22 is grounded via sequentially a first grounding resistor 203 and a second grounding resistor 204. A second LED drive pin LED2 of the charging management chip 22 is connected to the positive electrode of the battery 14 via a second connection resistor 205. A first indicator light pin LED1 of the master control circuit 50 is grounded via a first indicator branch 51. A second indicator branch 23 is grounded via a second indicator light branch 23. Each of the first indicator branch 51 and the second indicator branch 23 includes a current-limiting resistor R and an indicator LED that are in series connected to each other. It is understood that the keypad input end SW of the charging management chip 22 is electrically connected to the master control circuit 50, such that the master control circuit 50 can control the charging management chip 22 to ensure reliability of the control circuit. The first indicator branch 51 and the second indicator branch 23 indicate a charging state of the charging and power supply circuit 20 to improve the user experience. The master control circuit 50 may be an MCU.

As shown in FIGS. 2-4, in the refrigeration control circuit 40, the control end of the first control switch Q1 is electrically connected to the first pulse width signal output end C_PWM of the master control circuit 50 via a third connection resistor 207. A node between the control end of the first control switch Q1 and the third connection resistor 207 is grounded via a fourth connection resistor 208. The first control switch Q1 is a N-Metal-Oxide-Semiconductor (NMOS). The refrigeration member 13 further receives the output voltage of the battery 14 or the power supply voltage via a fifth connection resistor 209. It is understood that stability and safety of the control circuit can be improved by arranging the third connection resistor 207 and the fourth connection resistor 208. The first control switch Q1 is the NMOS, which has a low cost and a simple structure and can be controlled easily. The refrigeration member 13 directly receives the output voltage MVCC of the battery 14, such that a more direct and stable power supply is received, and therefore, stability of the control circuit is improved.

As shown in FIGS. 2-3 and FIGS. 2-5, the control circuit further includes a second control switch Q2, a first conductive end of the second control switch Q2 is electrically connected to the positive end BAT+ of the battery 14 to receive the output voltage from the battery 14. A second conductive end of the second control switch Q2 is electrically connected to a positive electrode of the refrigeration member 13. A control end of the second control switch Q2 is configured to receive the external voltage VCC and grounded and is electrically connected to the second conductive end of the second control switch Q2 and connected to the fan drive circuit 30. The second control switch Q2 is disconnected when receiving the external voltage VCC and is conducted when receiving no external voltage VCC. When the second control switch Q2 is conducted, the fan drive circuit 30 is powered by the battery 14. By arranging the second control switch Q2, when the external voltage VCC is connected, the external voltage VCC can directly supply power to the fan drive circuit 30, the fan drive circuit 30 is prevented from consuming the output voltage of the battery 14. In this way, the battery 14 can be charged faster, and the service life of the battery 14 may not be affected by charging and discharging at the same time.

As shown in FIGS. 3, the control end of the control switch Q2 may be grounded via a third grounding resistor 206 and is electrically connected to the second conductive end of the control switch Q2 and the fan drive circuit 30 via a first diode D2. The second control switch is a P-Metal-Oxide-Semiconductor (PMOS) field effect transistor. It is understood that stability and safety of the control circuit can be enhanced by the third grounding resistor 206 and the first diode D2, and the control switch Q2 is the PMOS field effect transistor, which is low-cost, simple in structure, and can be controlled easily.

As shown in FIGS. 2-5, the fan drive circuit 30 includes a second inductor L2, a third control switch Q3, a second diode D3, and a boost feedback branch 31. An end of the second inductor L2 is electrically connected to the charging and power supply circuit 20 to receive the external voltage VCC or receive the output voltage MVCC of the battery 14. The other end of the second inductor L2 is connected to the fan assembly 12 via a second diode D3. A first conductive end of the third control switch Q3 is connected to a node between the second inductor L2 and the second diode D3. A second conductive end of the third control switch Q3 is grounded. A control end of the third control switch Q3 is electrically connected to a second pulse width signal output end FPWM of the master control circuit 50 to receive a second pulse width control signal output of from the master control circuit 50. An end of the boost feedback branch 31 is connected to the node between the second diode D3 and the fan assembly 12, the other end of the boost feedback branch 31 is grounded. The boost feedback branch 31 includes a first voltage divider resistor 311 and a second voltage divider resistor 312 that is connected in series to the first voltage divider resistor 311. A node between the first voltage divider resistor 311 and the second voltage divider resistor 312 is connected to a boost feedback end FA AD of the master control circuit 50 via a third voltage divider resistor 313. A node between the third voltage divider 313 and the master control circuit 50 is grounded via a second grounding capacitor 314. It is understood that, in the fan drive circuit 30 of the above-described embodiment, the second inductor L2 can be charged and discharged by controlling the third control switch Q3 to be turned on and off, such that a voltage on a right side of the second inductor L2 can be increased to supply power to the fan assembly 12. The boost feedback circuit 31 samples a boosted voltage and feeds the boosted voltage back to the master control circuit 50, such that the master control circuit 50 can adjust the second pulse width control signal output to the third control switch Q3. In this way, the fan assembly 12 receives a substantially constant voltage. Furthermore, by adjusting the second pulse width control signal output to the third control switch Q3, the voltage supplied to the fan assembly 12 can be increased or decreased, such that the fan assembly 12 can rotate to reach various rotation speeds.

Further, the fan drive circuit 30 further includes a fourth control switch Q4, a third diode D4, a first feedback resistor 315, a second feedback resistor 316. A negative electrode of the third diode D4 is connected to the positive electrode of the fan assembly 12. The negative electrode of the fan assembly 12 is connected to a positive electrode of the third diode D4 and a first conductive end of the fourth control switch Q4. A control end of the fourth control switch Q4 is electrically connected to a fan enabling end FA EN of the master control circuit 50. A second conductive end of the fourth control switch Q4 is grounded via the first feedback resistor 315. A node between the second conductive end of the fourth control switch Q4 and the first feedback resistor 315 is electrically connected to a load feedback end LOAD AD of the master control circuit 50 via the second feedback resistor 316. A node between the second feedback resistor 316 and the master control circuit 50 is grounded via a third grounding capacitor 317. The fourth control switch Q4 enables the voltage boosted by the second inductor L2 and the third control switch Q3 to form a circuit by the fan assembly 12 being grounded, thereby driving the fan assembly 12 to rotate. Since the first feedback resistor 315 samples signals from the node between the second conductive end of the fourth control switch Q4 and the first feedback resistor 315 and feeds the sampled signals back to the master control circuit 50, the master control circuit 50 is enabled to detect whether the fan assembly 12 is blocked from rotating or short-circuited.

As shown in FIGS. 2-7, the control circuit further comprises an encoder 60, the encoder 60 is connected to the positive electrode BAT+ of the battery 14 and is grounded. Two output ends 611 and 612 of the encoder 60 are connected to the master control circuit 50. The encoder 60 has an infinite adjustment knob to be operated by the user. The user may operate the infinite adjustment knob to enable the two output ends 611 and 612 to output a plurality of digital signals. The master control circuit 50 is configured to control, based on the digital signals, the first control switch Q1 to control a refrigeration intensity of the refrigeration member 13 or to control, based on the digital signals, the fan drive circuit 30 to control a rotation speed of the fan 12. It is understood that, by arranging the encoder 60, the user may operate the infinite adjustment knob to generate the plurality of digital signals to control, based on the plurality of digital signals, the refrigeration intensity of the refrigeration member 13 or the rotation speed of the fan 12, such that the usage experience is improved.

A technical solution 3 is shown in FIGS. 3-1 to 3-7.

FIG. 3-1 shows the following.

A motor drive control circuit of the portable fan includes: a battery power supply, a voltage stabilizing unit 100, a master control unit 200, a motor drive control unit 300, a motor drive circuit 400, a motor 500, a rotor position detection circuit 600, a USB access circuit 700, an analog-to-digital converter (ADC) power supply circuit 800, and a display unit 900.

The portable fan includes: a handheld fan, a neck fan, a wearable fan, a waist-mounted fan, a neck fan, a head-mounted fan, a desktop fan, a vehicle-mounted fan, and so on.

FIG. 3-2 shows the following.

The voltage stabilizing unit 100 has a voltage stabilizing chip U1. A power supply voltage VBAT is connected, through a current limiting resistor R1, to an input pin IN of the voltage stabilizing chip U1. An end of a filter capacitor C1 is connected to the IN input pin 1 of the voltage stabilizing chip U1, and the other end is grounded. An output pin OUT of the voltage stabilizing chip U1 outputs an operating voltage VDD to supply power to a master control chip U2 and a motor driver chip U3. The output pin OUT of the voltage stabilizing chip U1 is grounded via a capacitor C2 to filter a current. A GND pin of the voltage stabilizing chip U1 is grounded.

The voltage stabilizing unit 100 is configured to stabilize the power supply voltage and ensure that a constant voltage is output under various load conditions. In this way, the current can be automatically adjusted as the power supply voltage changes, ensuring that the output voltage is constant. The voltage stabilizing unit 100 is configured to stabilize a voltage source, which has a large variation, preventing any external environmental factor (such as a temperature, humidity, and so on) from affecting the circuit.

FIGS. 3-3 shows the following.

In an embodiment, the motor drive control unit 300, the motor drive circuit 400, and the rotor position detection circuit 600 cooperatively drive the motor 500 to operate.

A permanent magnet is arranged on a rotor of the motor 500, and three windings U2, V2, and W2 are arranged on a stator of the motor 500 and connected to each other to form a Y shape.

The motor drive control unit 300 outputs a control signal, and the motor drive circuit 400 controls, based on the control signal, magnitudes, flowing directions, and a phase relationship of currents flowing through each winding phase U2, V2, and W2 of the motor 500.

The motor drive circuit 400 includes: a capacitor C3, a capacitor C4, and a capacitor C5 that are connected to each other in parallel.

An end of the motor drive circuit 400 is connected to the power supply voltage VBAT, and the other end of the motor drive circuit 400 is grounded to filter the current and stabilize the voltage.

In an embodiment, the motor drive circuit 400 further includes a MOS transistor switch Q1. An end of the MOS transistor switch Q1 is connected to the power supply voltage VBAT, and the other end of the MOS transistor switch Q1 is connected to the winding U2. Conduction of the MOS transistor switch Q1 is controlled by a MOS transistor switch Q4. An end of the MOS transistor switch Q4 is connected, via a voltage divider and current limiting resistor R5, to the power supply voltage VBAT; and the other end is grounded. The motor drive control unit 300 outputs a PWM_AH signal a drain of the MOS transistor switch Q4 to control the MOS transistor switch Q4 to be conducted or disconnected. An end of a MOS transistor switch Q7 is connected to the winding U2, and the other end is grounded via a resistor R11. The motor drive control unit 300 outputs a PWM_AL signal to a drain of the MOS transistor switch Q7 to control the MOS transistor switch Q7 to be conducted or disconnected. Each of the MOS transistor switches Q1, Q4, and Q7 is arranged with a reverse diode. Before the MOS transistor switches are damaged by an overvoltage, the reverse diodes can be reversely broken down, such that the MOS transistor switches are protected from being burned out.

In some embodiments, the MOS transistor switch Q1 is a P-type MOS transistor, and the MOS transistor switches Q4 and Q7 are N-type MOS transistors. A resistor R2 is connected to the drain and a source of the MOS transistor switch Q4, and a resistor R8 is connected to the drain and a source of the MOS transistor switch Q7, such that a bias voltage is provided for the field effect transistor. In addition, static electricity between a gate and the source of the MOS transistor can be discharged, such that the MOS transistor is protected.

A current control principle of the winding U2 is as follows.

The current flows into the winding U2 as follows. The motor drive control unit 300 outputs a PWM_AL low level signal to the drain of the MOS transistor switch Q7. The MOS transistor switch Q7 is in a cut-off state. The motor drive control unit 300 outputs the PWM_AH signal to the drain of the MOS transistor switch Q4, and the MOS transistor switch Q4 is conducted, the power supply voltage VBAT is grounded through the voltage divider and current limiting resistor R5. The drain of the MOS transistor switch Q1 is grounded, and a low level signal is input. The MOS transistor switch Q1 is conducted, and the current flows into the winding U2.

The current flows out of the winding U2 as follows. The motor drive control unit 300 outputs a PWM_AH low level signal to the drain of the MOS transistor switch Q4, the MOS transistor switch Q4 is in the cut-off state, the drain of the MOS transistor switch Q1 is connected to a high level signal, the MOS transistor switch Q1 is off. The motor drive control unit 300 outputs the PWM_AL signal to the drain of the MOS transistor switch Q7, the MOS transistor switch Q7 is conducted, and the current flows out of the winding U2.

In an embodiment, a MOS transistor switch circuit, which is formed by MOS transistor switches Q2, Q5, and Q8 and resistors R6, R3, and R9, controls a current to flow into and out of the winding V2. A circuit structure and a control principle for the winding V2 are similar to those for the winding U2.

In an embodiment, a motor overcurrent protection circuit includes a current sampling resistor R11, which is configured to monitor a current flowing out of the motor 500. A voltage of the resistor R11 is output, via a current limiting resistor R12, to an ISENSE_IN overcurrent protection detection pin of the motor drive control unit 300. The motor drive control unit 300 converts an input voltage signal into a corresponding digital signal to obtain a quantified current value of the motor 500. An end of a capacitor C6 is connected to the ISENSE_IN overcurrent protection detection pin of the motor drive control unit 300, and the other end is grounded to filter the current and stabilize the voltage. When the current value of the motor 500 exceeds a maximum operating current, the motor drive control unit 300 adjusts the control signal output to the motor drive circuit 400 to reduce the current flowing through the windings U2, V2, and W2 of the motor 500.

FIGS. 3-4 show the following.

In an embodiment, in the rotor position detection circuit 600, an end of the resistor R13 is connected to a BEMF_COM pin of the motor drive control unit 300, and the other end is grounded via a resistor R19. The winding U2 is connected to a BEMF_U pin of the motor drive control unit 300 via a resistor R14; and the other end of the resistor R14 is grounded via the resistor R19.

A BEMF inverted-phase electric potential output circuit, which is formed by a resistor R15, a resistor R16, and a resistor R20, outputs a BEMF inverted-phase electric potential voltage signal of the winding V2. A circuit structure and a control principle for the BEMF inverted-phase electric potential output circuit of the winding V2 is similar to those for the BEMF inverted-phase electric potential output circuit of the winding U2. The BEMF inverted-phase electric potential output circuit, which is formed by a resistor R17, a resistor R18, and a resistor R21, outputs a BEMF inverted-phase electric potential voltage signal of the winding W2. A circuit structure and a control principle for the BEMF inverted-phase electric potential output circuit of the winding W2 is similar to those for the BEMF inverted-phase electric potential output circuit of the winding U2.

The motor drive control unit 300 monitors line voltages of the windings U2, V2, and W2 through signals input from the BEMF_U, BEMF_V, and BEMF_W pins; and calculates an inverted-phase electric potential of the rotor of the motor 500, such that a position of the rotor of the motor 500 is calculated.

A drive and control principle of the motor 500 is as follows.

The master control unit 200 outputs a motor starting signal to an input end of the motor drive control unit 300. The motor drive control unit 300 outputs a motor drive signal to a gate of the MOS transistor of the motor drive circuit 400. The motor drive control unit 300 obtains a current position of the rotor of the motor 500 based on the inverted-phase electric potential and controls a phase relationship between outputs of various phases. Windings of two corresponding phases are provided with power at the same time, and a time length of supplying the power to each of the windings of two corresponding phases satisfies an electric angle of 120 degrees. In this way, a direction of a magnetic chain of the stator is reversed to form a certain angle with respect to a magnetic chain of the rotor, so as to drive the rotor of the motor 500 to rotate.

FIG. 3-5 shows the following.

In an embodiment, the motor drive control unit 300 includes a motor drive chip U3. A VDD power supply pin 12 of the motor drive chip U3 is connected to a VDD operating voltage. The capacitor C7 is connected to the VDD power supply pin 12 of the motor drive chip U3 to filter the current and stabilize the voltage. A GND pin 5 of the motor drive chip U3 is connected to the ground. A PWM pin 11 of the motor drive chip U3 receives a motor operation pulse modulation signal PWM. Pins 1-3 and 14-16 of the motor drive chip U3 output motor drive signals to the gate of the MOS transistor of the motor drive circuit 400. Pins 6-8 of the motor drive chip U3 receive the inversed-phase electric potential signals BEMF_U, BEMF_V, and BEMF_W. A FG pin 13 of the motor drive chip U3 outputs motor rotation speed information. An ISENSE_IN pin 9 of the motor drive chip U3 receives an overcurrent protection signal.

FIGS. 3-6 and 3-7 show the following.

In an embodiment, in the USB access circuit 700, a USB voltage VBUS outputs a USBDET signal through a current limiting resistor R22; a positive electrode of a diode D2 is grounded, and a negative electrode of the diode D2 receives the USB voltage VBUS through the resistor R22, such that overvoltage protection is provided for the master control unit.

In an embodiment, in a battery voltage detection ADC circuit 800, the battery voltage VBAT is grounded via resistors R23 and R24, and a capacitor C8 is connected in parallel with the resistor R24; and an end of the resistor R24 outputs an ADC voltage signal V_ADC.

In an embodiment, the motor drive control circuit of the portable fan is arranged with a transfer interface P2. The transfer interface P2 transmits an enabling signal P_EN of a dip switch and gear adjustment signals KEY, KEY_X, and KEY_Y to the master control unit 200 of the portable fan. The VDD power supply is supplied to a mode switching roller via current limiting resistors R25 and R26.

In an embodiment, the display unit 900 includes: an SMG switch interface and a digital display. An adapter interface pins 1-5 of the SMG switch interface are connected to the master control unit 200 via current limiting resistors R25-R29 to receive display control signals and transmit the display control signals to the digital display. The digital display displays, based on the display control signals, a temperature of the airflow blown from the portable fan and a battery power level of the portable fan.

In an embodiment, the master control unit 200 includes a control chip U4. A VDD power supply pin 1 of the control chip U4 is connected to the VDD operating voltage. A VDD power supply pin 1 of the control chip U4 is grounded via a voltage stabilizing capacitor C9. The VSS pin 16 of the control chip U4 is grounded. Pins 4, 6, and 7 of the control chip U4 receive the gear adjustment signals KEY, KEY_X, KEY_Y and send an operation state command of the portable fan. A pin 5 of the control chip U4 outputs the motor operation pulse modulation signal PWM to the motor drive chip U3. A pin 8 of the control chip U4 receives the USBDET signal to determine a power supply state. A pin 9 of the control chip U4 receives an ADC voltage signal V_ADC. Pins 2 and 12-15 of the control chip U4 are connected to the display unit 900 to output the display control signals.

A technical solution 4 is shown in FIGS. 4-1 to 4-24.

As shown in FIGS. 4-1 to 4-3, in a first implementation, a fan drive circuit is provided. The fan drive circuit is applicable for various types of fans. Specifically, the fan drive circuit includes: a master control circuit 11, a three-phase drive circuit 12, and an inverted-phase electric potential detection circuit 14.

The three-phase drive circuit 12 includes at least three signal input ends 121 and three drive signal output ends 122. Each of the at least three signal input ends 121 is electrically connected to the master control circuit 11 to receive control signals. The three drive signal output ends 122 are electrically connect to three signal ends (U, V, and W) of a direct-current (DC) brushless fan motor to output a three-phase drive signal to drive the DC brushless fan motor to rotate. The inverted-phase electric potential detection circuit 14 includes three detection branches 141. Each detection branch 141 includes a detection end 1411 and a detection output end 1412 electrically connected to the detection end. Three detection ends 1411 of the three detection branches 141 are respectively electrically connected to the three drive signal output ends 122. Three detection output ends 1412 of the three detection branches 141 are electrically connected to the master control circuit 11 to respectively output a first detection signal, a second detection signal, and a third detection signal. In this way, the master control circuit 11 is informed of a phase of the three-phase drive signal based on the first detection signal, the second detection signal, and the third detection signal to adjust the control signals.

As shown in FIG. 3, the detection branch 141 includes a first detection resistor R1, a second detection resistor R2, and a third detection resistor R3. The first detection resistor R1 and the second detection resistor are connected to each other in series. An end of the first detection resistor R1 away from the second detection resistor R2 is the detection end 1411, and an end of the second detection resistor R2 away from the first detection resistor R1 is grounded. A node between the first detection resistor R1 and the second detection resistor R2 is the detection output end 1412.

By arranging the three-phase drive circuit 12, energy-saving performance and control performance of the fan motor are improved, and a service life of the fan drive circuit and the portable fan is extended. By arranging the inverted-phase electric potential detection circuit 14, the master control circuit 11 may be easily informed of the phase of the DC brushless fan motor, such that the master control circuit 11 may send corresponding control signals to the three-phase drive circuit 12 to control driving of the DC brushless fan motor, and reliability and stability of the driving is improved.

As shown in FIG. 4-2, the three-phase drive circuit 12 includes a first transistor Q1, a second transistor Q2, a third transistor Q3, a fourth transistor Q4, a fifth transistor Q5, a sixth transistor Q6, a seventh transistor Q7, an eighth transistor Q8, and a ninth transistor Q9. A first conductive end 1211 of the first transistor Q1, a first conductive end 1211 of the second transistor Q2, and a first conductive end 1211 of the third transistor Q3 are connected to a power supply end 1212. A first conductive end 1211 of the fourth transistor Q4 is connected to the power supply end 1212. A first conductive end 1211 of the fifth transistor Q5 is connected to the power supply end 1212. A first conduction end 1211 of the sixth transistor Q6 is connected to the power supply end 1212. A control end of the fourth transistor Q4, a control end of the fifth transistor Q5, and a control end of the sixth transistor Q6 are electrically connected to the master control circuit 11. A control end of the seventh transistor Q7 is electrically connected to the control end of the fourth transistor Q4, a control end of the eighth transistor Q8 is electrically connected to the control end of the fifth transistor Q5, and a control end of the ninth transistor Q9 is electrically connected to the control end of the sixth transistor Q6, such that the control signals are received. Second conduction ends 1213 of the fourth transistor Q4, the fifth transistor Q5, and the sixth transistor Q6 are grounded. A first conductive end 1211 of the seventh transistor Q7 is connected to a second conductive end 1213 of the first transistor Q1. A second conductive end 1213 of the seventh transistor Q7 is grounded. A first conductive end 1211 of the eighth transistor Q8 is connected to a second conductive end 1213 of the second transistor Q2. A second conductive end 1213 of the eighth transistor Q8 is grounded. A first conductive end 1211 of the ninth transistor Q9 is connected to the second conductive end 1213 of the third transistor Q3. A second conductive end 1213 of the ninth transistor Q9 is grounded. A node between the first conductive 1211 of the seventh transistor Q7 and the second conductive 1213 of the first transistor Q1, a node between the first conductive 1211 of the eighth transistor Q8 and the second conductive 1213 of the second transistor Q2, and a node between the first conductive 1211 of the ninth transistor Q9 and the second conductive 1213 of the third transistor Q3 respectively serve as the three drive signal output ends 122. The at least three signal input ends 121 are three PWM signal input ends. The control signals include three PWM signals.

As shown in FIG. 4-2, the fan drive circuit further includes a current detection circuit 15. The second conductive ends 1213 of the seventh transistor Q7, the eighth transistor Q8, and the ninth transistor Q9 are all grounded via the current detection circuit 15. The current detection circuit 15 is electrically connected to the master control circuit 11. The current detection circuit 15 includes a sense resistor 151 and a sense capacitor 152. The second conductive ends 1213 of the seventh transistor Q7, the eighth transistor Q8, and the ninth transistor Q9 are grounded via the sense resistor 151 and the sense capacitor 152 sequentially. A node between the sense resistor 151 and the sense capacitor 152 is electrically connected to the master control circuit 11. By arranging the current detection circuit 15, when a current is abnormal, the master control circuit 11 may control the fan drive circuit to stop operating or to operate at a lower power, such that an overcurrent protection is provided for the fan drive circuit, and reliability and the service life of the fan drive circuit are improved.

As shown in FIGS. 4-4 and 4-6, the fan drive circuit further includes an interface circuit 16 and a charge management circuit 17. The interface circuit 16 is configured to be electrically connected to an external power source to receive an external voltage. The charge management circuit 17 is electrically connected between the interface circuit 16 and a battery VBAT to receive the external voltage and to charge or output a power supply voltage to the battery VBAT. The fan drive circuit further includes a keypad 31. An end of the keypad 31 is connected to the master control circuit 11, and the other end of the keypad 31 is grounded. The fan drive circuit further includes an indicator branch 19. The indicator branch 19 includes a light-emitting diode and a resistor that is connected in series to the light-emitting diode. A positive-electrode of the light-emitting diode is electrically connected to the master control circuit 11, and a negative-electrode of the light-emitting diode is grounded.

Specifically, in the present embodiment, the fan drive circuit may be arranged for a neck fan, but is not limited to neck fans, the fan drive circuit may further be applied to other portable fans such as desktop table fans, floor fans, handheld fans, clip fans, folding fans, and the like. Two DC brushless fan motors are respectively arranged in a left side and a right side of the neck fan and are configured to respectively drive fan blades in the left side and fan blades in the right side of the neck fan to rotate.

As shown in FIGS. 4-1, 4-2 and 4-5, the master control circuit 11 includes a master control chip 111 and an auxiliary chip 113. The master control circuit 11 includes the master control chip 111 and the auxiliary chip 113. Two three-phase drive circuits 12, two inverted-phase electric potential detection circuits 14, and two DC brushless fan motors are arranged in one-to-one correspondence to each other. The master control chip 111 is electrically connected to one of the two three-phase drive circuits 12 to output the control signals to one of the two three-phase drive circuits 12 to drive the respective one of the two brushless DC fan motors. The inverted-phase electric potential detection circuit 14 is electrically connected to one three-phase drive circuit 12 and outputs the first detection signal, the second detection signal, and the third detection signal to the master control chip 111. In this way, the master control chip 111 is informed of the phase of the three-phase drive signal of the one three-phase drive circuit 12 to adjust the control signals output to the one three-phase drive circuit 12. The auxiliary chip 113 is electrically connected to the other three-phase drive circuit 12 to output the control signals to the other three-phase drive circuit 12 to drive the other one of the two DC brushless fan motors. The other inverted-phase electric potential detection circuit 14 is electrically connected to the respective one three-phase drive circuit 12 and outputs a corresponding first detection signal, a corresponding second detection signal and a corresponding third detection signal to the auxiliary chip 113. In this way, the auxiliary chip 113 is informed of the phase of the three-phase drive signal of the other three-phase drive circuit 12 to adjust the control signals output to the other three-phase drive circuit 12.

In this embodiment, the master control chip 111, the corresponding three-phase drive circuit 12, and the corresponding inverted-phase electric potential detection circuit 14 are arranged on one module (such as on a first circuit board) and may be arranged on a same side of the neck fan as the corresponding DC brushless fan motor. The auxiliary chip 113, the corresponding three-phase drive circuit 12, and the corresponding inverted-phase electric potential detection circuit 14 are arranged on another one module (such as on a second circuit board that is independent from the first circuit board) and may be arranged on the other side of the neck fan, together with the corresponding DC brushless fan motor. It is understood that the above configuration has better rationality and compactness, and reliability of connection and driving is improved. However, arrangement of the three-phase drive circuit 12, the inverted-phase electric potential detection circuit 14, the master control chip 111, and the auxiliary chip 113 may be arranged in various manners. For example, the three-phase drive circuit 12, the inverted-phase electric potential detection circuit 14, the master control chip 111, and the auxiliary chip 113 are arranged on a same circuit board; alternatively, the three-phase drive circuit 12 and the inverted-phase electric potential detection circuit 14 are arranged on one circuit board, and the master control chip 111 and the auxiliary chip 113 are arranged on another one circuit board. The arrangement may be determined according to the actual demands, which will not described here.

As shown in FIGS. 4-7 and 4-8, the fan drive circuit further includes a first connector 261 and a speed adjustment interface circuit 26 having a second connector 262. A first pin and a second pin of the first connector 261 are electrically connected to the master control chip 111. A third pin of the first connector 261 is grounded. A first pin of the second connector 262 is connected to the battery VBAT via a first connection resistor and is also connected to the auxiliary chip 113 via a second connection resistor. A second pin of the second connector 262 is connected to the auxiliary chip 113 via a third connection resistor, and a third pin of the second connector 262 is grounded. In addition, each pin of the first connector 261 and the second connector 262 may be electrically connected to each other in one-to-one correspondence with each other. In this way, rotation speeds of the two DC brushless fan motors may be synchronously adjusted.

As shown in FIGS. 4-9 to 4-14, the fan drive circuit of a second implementation is shown. Portions of the fan drive circuit of the present implementation are the same as those in the first implementation and will not be repeated. Portions of the fan drive circuit of the present implementation that are different from those in the first implementation will be described in the following. Firstly, the master control circuit 11 of the present implementation is different from that of the first implementation, and the master control circuit 11 of the present implementation may substantially include the master control chip 111.

As shown in FIG. 4-10, in the second implementation, the three-phase drive circuit 12 includes a first transistor Q1, a second transistor Q2, a third transistor Q3, a fourth transistor Q4, a fifth transistor Q5, and a sixth transistor Q6. A first conductive end 1211 of the first transistor Q1, a first conductive end 1211 of the second transistor Q2, and a first conductive end 1211 of the third transistor Q3 are connected to a power supply end 1212. A first conductive end 1211 of the fourth transistor Q4 is connected to a second conductive end 1213 of the first transistor Q1. A first conductive end 1211 of the fifth transistor Q5 is connected to a second conductive end 1213 of the second transistor Q2. A first conduction end 1211 of the sixth transistor Q6 is connected to a second conductive end 1213 of the third transistor Q3. A node between the first conductive 1211 of the fourth transistor Q4 and the second conductive 1213 of the first transistor Q1, a node between the first conductive 1211 of the fifth transistor Q5 and the second conductive 1213 of the second transistor Q2, and a node between the first conductive 1211 of the sixth transistor Q6 and the second conductive 1213 of the third transistor Q3 respectively serve as the three drive signal output ends 122. Control ends of the first transistor Q1, the second transistor Q2, the third transistor Q3, the fourth transistor Q4, the fifth transistor Q5, and the sixth transistor Q6 are electrically connected to the master control circuit 11 to receive the control signals; and the control signals include six PWM signals.

As shown in FIG. 4-10, substantially the same as the first implementation, the second conductive end 1213 of the sixth transistor Q6 is grounded via the current detection circuit 15, and the current detection circuit 15 is electrically connected to the master control circuit 11. The current detection circuit 15 includes a sense resistor 151 and a sense capacitor 152. The second conductive end 1213 of the sixth transistor Q6 is grounded via the sense resistor 151. The sense capacitor 152 is connected in parallel with the sense resistor 151. A node between the sense resistor 151 and the second conduction end 1213 of the sixth transistor Q6 is electrically connected to the master control circuit 11. The current detection circuit 15 further includes a first series resistor 153, a second series resistor 154, a parallel resistor 155. The parallel resistor 155 is connected in parallel with the sense resistor 151. The first series resistance 153 is connected between an end of the sense capacitor 152 and an end of the sense resistor 151. The second series resistance 154 is connected between the other end of the sense capacitor 152 and the other end of the sense resistor 151. By arranging the current detection circuit 15, when the current is abnormal, the master control circuit 11 may control the fan drive circuit to stop operating or to operate at a lower power, such that an overcurrent protection is provided for the fan drive circuit, and reliability and the service life of the fan drive circuit are improved.

As shown in FIG. 4-11, the inverted-phase electric potential detection circuit 14 of the second implementation is substantially the same as that of the first implementation, and will not be repeated herein.

As shown in FIG. 4-12, the fan drive circuit further includes a transistor temperature detection circuit 24. The transistor temperature detection circuit 24 may be disposed adjacent to each transistor of the three-phase drive circuit 12 and includes a first voltage divider resistor 241 and a thermistor 242 connected in series with the first voltage divider resistor 241. The thermistor 242 is configured to sense a temperature of each transistor of the three-phase drive circuit 12. A node between the first voltage divider resistor 241 and the thermistor 242 is electrically connected to the master control circuit 11 and is configured to output a temperature signal, enabling the master control circuit 11 to control, based on the temperature signal, the fan drive circuit to enter or not enter a temperature protection state. The thermistor 242 is connected between the first voltage divider resistor 241 and the ground. The transistor temperature detection circuit 24 further includes a voltage regulated capacitor 243 connected in parallel with the thermistor 242. By arranging the transistor temperature detection circuit 24, the master control circuit 11 may be informed whether the temperature of each transistor of the three-phase drive circuit 12 is abnormal and may control the fan drive circuit to stop operating or to operate at a lower power when the temperature is abnormal. In this way, an over-temperature protection is provided for the fan drive circuit, and reliability and the service life of the fan drive circuit are improved.

As shown in FIG. 4-13, the fan drive circuit further includes a battery voltage detection circuit 25 that is electrically connected between the positive electrode of the battery VBAT and the ground. An output end of the battery voltage detection circuit 25 is electrically connected to the master control circuit 11. By arranging the battery voltage detection circuit 25, the master control circuit 11 may be informed whether a battery voltage is normal or not. When the battery voltage is abnormal, the master control circuit 11 may control the fan drive circuit to stop operating or to operate at a lower power. Therefore, reliability and the service life of the fan drive circuit are improved.

Specifically, the battery voltage detection circuit 25 includes a second voltage divider resistor 251 and a third voltage divider resistor 252 that is connected in series to the second voltage divider resistor 251. A node between the second voltage divider resistor 251 and the third voltage divider resistor 252 is electrically connected to the master control circuit 11. It is understood that the above-described battery voltage detection circuit 25 is simple in structure and has high reliability and a low cost.

As shown in FIG. 4-14, the fan drive circuit of the second implementation further includes a burner interface 28 to burn in a control program to the master control circuit 11. The burner interface 28 may be a SWD burner interface, but is not limited to the above.

As shown in FIGS. 4-15 to 4-16, the fan drive circuit of a third implementation is provided. Portions of the fan drive circuit of the present implementation are the same as those in the second implementation and will not be repeated. Portions of the fan drive circuit of the present implementation that are different from those in the second implementation will be described in the following.

As shown in FIGS. 4-15 to FIG. 4-17, the three-phase drive circuit 12 of the third implementation is essentially the same as the three-phase drive circuit 12 of the second implementation. The master control circuit 11 of the third implementation is different from that of the second implementation. In the present implementation, the master control circuit 11 includes a master control chip 111 and three three-phase control chips 112. Each of the three three-phase control chips 112 is electrically connected to the master control chip 111 and the three-phase drive circuit 12.

As shown in FIGS. 4-16 and 4-18, the fan drive circuit further includes a filter capacitor 253 and a sampling resistor 254 connected in series to the filter capacitor 253. The sampling resistor 254 is connected between the filter capacitor 253 and the ground. A node between the filter capacitor 253 and the sampling resistor 254 is electrically connected to the master control circuit 11. Further, the fan drive circuit further includes a signal amplification circuit 29. An input end of the signal amplification circuit 29 is connected to the node between the filter capacitor 253 and the sampling resistor 254. The signal amplification circuit 29 is configured to amplify a signal sampled by the sampling resistor 254 (i.e., a signal of the node between the filter capacitor 253 and the sampling resistor 254) and to provide the amplified signal to the master control circuit 11. In this way, the main control circuit 11 of the fan drive circuit may keenly detect an abnormal voltage or current signal when the fan drive circuit is abnormal and then perform protection against the abnormalities, such as stopping operating or reducing a fan speed. In this way, safety of using the fan drive circuit is improved.

As shown in FIG. 4-19, the transistor temperature detection circuit 24 of the third implementation is essentially the same as that of the second implementation and will not be repeated herein.

As shown in FIG. 4-20, a schematic view of a light control circuit 30 of the fan drive circuit in the third implementation is provided. The light control circuit 30 includes a light-emitting element 301 and a control switch 302. A positive electrode of the light-emitting element 301 receives a drive voltage. A negative electrode of the light-emitting element 301 is grounded via two conductive ends of the resistor and the control switch 302. A control end of the control switch 302 is electrically connected to the master control circuit 11, such that the master control circuit 11 outputs a light control signal to the control end of the control switch 302 to control the light-emitting element 301 to emit light.

As shown in FIG. 4-21, the fan drive circuit further includes a Hall detection circuit 23. The Hall detection circuit 23 is electrically connected to the master control circuit 11 to detect a magnetic field generated by the DC brushless fan motor and to output a Hall detection signal to the master control circuit 11. In this way, the master control circuit 11 may be informed, based on the Hall detection signal, of a position of a rotor of the DC brushless fan motor, such that the master control circuit 11 may provide a corresponding control signal to control the DC brushless fan motor to operate. In this case, a start-up time length of the fan using the fan drive circuit is shorter, and the fan may not shake during starting-up, and a better user experience is provided.

As shown in FIG. 4-21, the Hall detection circuit 23 further includes a motor temperature detection element 232 connected between a Hall element 231 of the Hall detection circuit 23 and the master control circuit 11. The motor temperature detection element 232 may be a sampling resistor. By arranging the motor temperature detection element 232, the master control circuit 11 may be informed of whether a temperature of the DC brushless fan motor is abnormal. When the temperature of the DC brushless fan motor is abnormal, the master control circuit 11 may control the fan drive circuit to stop operating or operate at a lower power, such that an over-temperature protection is provided for the fan drive circuit, and reliability and the service life of the fan drive circuit are improved.

As shown in FIGS. 4-17 and 4-22, the fan drive circuit further includes a voltage conversion circuit 20. The voltage conversion circuit 20 is configured to receive a battery voltage (VB+), convert the battery voltage into a drive voltage (such as 15V), and provide the drive voltage to power supply ends of the three three-phase control chips 112. The master control chip 111 is configured to output a master control signal to the three three-phase control chips 112, such that each of the three three-phase control chips 112 outputs the respective control signal to the three-phase drive circuit 12.

The fan drive circuit further includes a switch control circuit 21. The switch control circuit 21 is electrically connected to the battery VBAT, the voltage conversion circuit 20, and the master control circuit 11 to control operation of the voltage conversion circuit 20. The switch control circuit 21 includes a keypad 211, a first switch transistor 212, a second switch transistor 213, and a third switch transistor 214. Two conductive ends of the first switch transistor 212 are respectively connected to the positive electrode of the battery VBAT and the input end of the voltage conversion circuit 20. A control end of the first switch transistor 212 is grounded via two conductive ends of the third switch transistor 214. The positive electrode of the battery VBAT is connected to the control end of the third switch transistor 214 via the two conductive ends of the first switch transistor 212 and a one-way diode 215. A control end of the second switch transistor 213 is grounded via the keypad 211. A control end of the third switch transistor 214 is electrically connected to the master control circuit 11. A node between the second switch transistor 213 and the one-way diode 215 is further electrically connected to a switch signal end of the master control circuit 11.

When the keypad 211 is pressed to be conductive, the second switch transistor 213 is turned on, the third switch transistor 214 is turned on, and the node between the second switch transistor 213 and the one-way diode 215 outputs a first switching signal (ON) to the switch signal end of the master control circuit 11. The first switch transistor 212 is turned on to enable the battery voltage of the battery VBAT to be supplied to the voltage conversion circuit 20. When the pressing on the keypad 211 is released, the second switch transistor 213 is turned off, the master control circuit 11 maintains the third switch transistor 214 to be turned on based on a power supply turn-on signal being output from the first switching signal to the control end of the third switch transistor 214, and the battery voltage of the battery VBAT is supplied to the voltage conversion circuit 20.

Further, when the battery voltage of the battery VBAT is supplied to the voltage conversion circuit 20, and when the keypad 211 is again pressed to be conductive, the node between the second switch transistor 213 and the one-way diode 215 outputs a second switching signal (OFF) to the switch signal end of the master control circuit 11, the master control circuit 11 controls the third switch transistor 214 to be turned off based on a power supply turn-off signal being output from the second switching signal to the control end of the third switch transistor 214. In this way, the first switch transistor 212 is turned off, the battery voltage of the battery VBAT cannot be supplied to the voltage conversion circuit 20 until the keypad 211 is again pressed.

The keypad 211, the first switch transistor 212, the second switch transistor 213 and the third switch transistor 214 operate together with the master control circuit 11 to control whether the battery voltage of the battery VBAT is supplied to the voltage conversion circuit 20. In this way, a simple control logic is provided, and the circuit has higher reliability.

As shown in FIG. 4-23, the fan drive circuit further includes a DC conversion circuit 22. The DC conversion circuit 22 is configured to receive the drive voltage (such as a DC voltage of 15V) and convert the drive voltage to other DC operating voltages, such as a DC operating voltage of 3.3V and 5V.

As shown in FIG. 24, the present disclosure further provides a portable fan 2. The portable fan 2 includes a fan drive circuit 3, a DC brushless fan motor 4, and fan blades 5 driven by the DC brushless fan motor. The fan drive circuit 3 may be arranged with the fan drive circuit as described in any of the above embodiments.

For the fan drive circuit and the portable fan 2 in the present embodiment, the master control circuit 11, the three-phase drive circuit 12, the inverted-phase electric potential detection circuit 14, and the DC brushless fan motor are arranged. The energy-saving performance and control performance of the fan motor are improved, such that reliability of the fan drive circuit and the fan 2 are improved. In addition, the service life of the fan drive circuit and the fan 2 is extended, the arrangement of the DC brushless fan motor allows the fan 2 to have a more compact and smaller configuration, and the fan 2 has increased competitiveness in the market.

A technical solution 5 is shown in FIG. 5-1 to FIG. 5-3.

FIGS. 5-1 to 5-3 show the following.

A charging management circuit for a portable fan includes at least one of a fast charging management unit 300 and a charging management unit 400. The fast charging management unit 300 includes a fast charging communication module, a fast charging control signal output module, a fast charging voltage setting module, and a fast charging current setting module. The charging management unit 400 includes a charging communication module, a charging drive module, a charging current detection module, a termination voltage setting module, a charging state output module, and an over-temperature protection module. The charging management circuit of the portable fan having the fast charging management unit and the charging management unit can switch between a fast charging mode and an ordinary boost charging mode.

The portable fan includes: a handheld fan, a neck fan, a desktop fan, a waist-mounted fan, a neck fan, a head-mounted fan, and so on.

The charging management circuit further includes: a charging adapter 100, a USB input unit 210, a USB output unit 220, a control unit 500, a battery pack 600, and a charging display unit 700. The charging adapter 100 is connected to the USB input unit 210; the USB output unit 220 is connected to the fast charging management unit 300 and the charging management unit 400. The fast charging management unit 300 and the charging management unit 400 are connected to the control unit 500. A fast charging control signal output module of the fast charging management unit 300 is connected to a controlled end of a switch circuit. The charging management unit 400 is connected to the battery pack 600. The fast charging management unit 300 and the control unit 500 are connected to the battery pack 600 via the charging management unit 400. The charging display unit 700 is connected to the control unit 500.

The portable fan is connected, via the charging adapter 100, the USB input unit 210 and the USB output unit 220, to the fast charging management unit 300, the charging management unit 400, and the control unit 500 to supply power to the battery pack 600. The fast charging management unit 300 and the charging management unit 400 communicate with the charging adapter 100 through a USB interface.

The USB output unit 220 includes a USB interface J1, the fast charging management unit 300 includes a power discharging protocol chip (USB PD Sink) U2, and the charging management unit 400 includes a charging chip U1.

A pin A1B12 and a pin A12B1 of the USB interface J1 are grounded. The fast charging management unit 300 and the charging management unit 400 are connected to VBUS pins A4B9 and A9B4 of the USB interface J1 to be connected to an external power supply. A DP data pin A6B6 and a DM data pin A7B7 of the USB interface J1 are connected to the fast charging management unit 300 and the charging management unit 400 to enable the fast charging management unit 300 and the charging management unit 400 to identify the external power supply. The DP (data plus, data positive signal) and the DM (data minus, data negative signal) are data signal lines of the USB.

In an embodiment, the PD Sink U2 is communicatively connected to the USB interface J1 via a data signal line of the fast charging communication module and a configuration channel. In the fast charging communication module, a DP' data pin 2 of the PD sink U2 is connected to a DP data pin A6B6 of the USB interface J1 via a current limiting resistor R1; a DM' data pin 3 of the power PD sink U2 is connected to a DM data pin A7B7 of the USB interface J1 via a current limiting resistor R2; a first pin 4 of a connection configuration (CC) 1 configuration channel of the PD sink U2 and a second pin 5 of a CC2 configuration channel of the USB interface J1 are respectively connected to a first pin A5 of a CC1 configuration channel and a second pin B5 of a CC2 configuration channel of the USB interface J1. A first pin 4 of the CC1 configuration channel and a second pin 5 of the CC2 configuration channel of the PD sink U2 are connected to the ground via capacitors C1 and C2. The capacitors C1 and C2 are configured to filter currents and stabilize voltages. The fast charging communication module of the PD sink U2 is connected to the charging adapter 100 via a USB cable to establish a data mode (DM, DP communication), a fast charging communication mode (Powered Device: PD2.0/3.0, Quick Connect: QC2.0/3.0, Appledivider 3, Battery Charge: BC1.2 SDP, Digital Communication Protocol/Charging Downstream Port: DCP/CDP) to apply, identify, and monitor a voltage needed to charge the battery pack 600 of the portable fan.

In an embodiment, in the fast charging control signal output module, the PD sink U2 establishes fast charging communication with the charging adapter 100 via configuration channel pins (pins 4, 5); and a fast charging drive signal is output via a fast charging drive pin 10.

In an embodiment, a VIN chip power supply pin 1 of the PD sink U2 is connected to the VBUS via the current limiting resistor R3, and a VIN chip power supply pin 1 of the PD sink U2 is grounded via a voltage stabilizing capacitor C3.

In the fast charging voltage setting module, a VSET voltage setting pin 8 of the PD sink U2 is grounded via a resistor R4; the PD sink U2 obtains a voltage signal of the resistor R4 to set a charging voltage for the battery pack 600 in the fast charging mode. The charging voltage for the battery pack 600 in the fast charging mode can be changed by changing a resistance value of the resistor R4.

In the fast charging current setting module, an ISET current setting pin 9 of the PD sink U2 is grounded via a resistor R5, and the PD sink U2 obtains a voltage signal of the resistor R5 to set a charging current for the battery pack 600 in the fast charging mode. The charging current for the battery pack 600 in the fast charging mode can be changed by changing a resistance value of the resistor R5.

The fast charging mode operates as follows.

The PD sink U2 establishes PD fast charging communication with the charging adapter 100 via the first pin 4 of the CC1 configuration channel and the second pin 5 of the CC2 configuration channel; sets the charging voltage in the fast charging mode based on signals of the monitored VSET voltage setting pin 8; sets the charging current in the fast charging mode based on signals of the monitored ISET current setting pin 9; outputs the fast charging drive signal via a GATE pin 10. A charging head outputs a high voltage for the battery pack 600 to achieve fast charging. An I2C (Serial Bus) bus is connected via a serial data line (SDA) pin 6 and a serial clock line (SCL) pin 7 to communicatively transmit a fast charging state with control unit 500 of the portable fan.

The VBUS charging input pin 1 of the charging chip U1 is connected to the VBUS. An end of the voltage stabilizing capacitor C4 is connected to the VBUS charging input pin 1 of the charging chip U1; and the other end is grounded to filter the current and stabilize the power supply.

In an embodiment, in the charging communication module, a DPC data positive signal pin 5 of the charging chip U1 is connected to a USB data positive signal via a current limiting resistor R6, and a DMC data negative signal pin 6 is connected to a USB data negative signal via a current limiting resistor R7. The charging communication module is configured for the charging chip U1 to identify a state of the external power supply.

In an embodiment, in the charging drive module, a first pin 12 of a SW1 inductor and a second pin 13 of a second SW2 inductor of the charging chip U1 are respectively connected to two ends of a variable voltage storage inductor L1; a BT1 first bootstrap capacitor pin 11 of the BT1 and a BT2 second bootstrap capacitor pin 14 of the charging chip U1 are respectively connected to the two ends of the variable voltage storage inductor L1 via capacitors C5 and C6. The capacitors C5 and C6 are bootstrap capacitors and provide a boost bias voltage for the boost circuit. The two ends of the variable storage inductor L1 are grounded respectively via current limiting resistors R8 and R9. Two RC circuits are arranged on a NC of the charging chip U1 to be respectively connected in parallel to the resistors R8 and R9 and are then grounded, such that high-frequency signals are filtered out.

A VBAT charging output pin 3 of the charging chip U1 is connected to the battery pack 600. Filter capacitors C7, C8, C9, C10 and C11 are connected to each other in parallel, and subsequently, an end of the filter capacitors is connected to the pin 3 of the charging chip U1, and the other end thereof is grounded. The positive electrode of the diode D2 is grounded, and the negative electrode is connected to the VBAT charging output pin 3 of the charging chip U1. The charging chip U1 charges the battery pack 600 through the charging drive module in a boost charging mode.

An ordinary charging mode operates as follows.

The charging adapter 100 is an ordinary charging adapter. The charging chip U1 handshakes and communicates with the charging adapter 100 through the DPC data positive signal pins 5 and 6 to request a charging voltage. The charging chip U1 controls a MOS transistor circuit, which is internally integrated with the charging chip U1, to charge and store energy for the inductor L1. Subsequently, the charging chip U1 conducts the MOS transistor circuit to release the energy of the inductor L1, and at this moment, the inductor L1 is connected in series with the VBUS to cooperatively achieve a boosting effect, and the battery pack 600 is charged through the boost circuit.

The charging chip U1 can increase or decrease a voltage. When an input voltage is lower than the charging voltage, the charging chip U1 increases the input voltage to the charging voltage to charge the battery pack 600. When the input voltage is higher than the charging voltage, the charging chip U1 decreases the input voltage to the charging voltage to charge the battery pack 600.

In an embodiment, in the charging current detection module, a CSP current sampling positive pin 20 and a CSN current sampling negative pin 21 of the charging chip U1 are connected to each other via a sampling resistor R10 arranged therebetween, so as to sense a charging current. Capacitors C12, C13, C14, and C15 are connected to each other in parallel, and subsequently, an end of the capacitors is connected to the CSP current sampling positive pin 20 of the charging chip U1, and the other end thereof is grounded to filter the current and stabilize the voltage. A CSO inductive current monitoring pin 19 of the charging chip U1 is grounded via a resistor R11. A voltage of the CSO inductive current monitoring pin 19 of the charging chip U1 is positively correlated to the inductive charging current. The charging chip U1 detects a value of the charging current of the battery pack 600 through the charging current detection module.

In an embodiment, in the termination voltage setting module, a CSE battery termination voltage setting pin 7 of the charging chip U1 is grounded via a resistor R12; and a resistance value of the resistor R12 is configured to set a battery termination voltage in the charging mode.

In an embodiment, in the over-temperature protection module, a NTC thermistor pin 18 of the charging chip U1 is grounded via a resistor R14.

In the charging state output module, a PG charging state pin 8 of the charging chip U1 is connected to the supply voltage VCC via a pull-up resistor R13, and the charging chip U1 outputs a charging state signal via the PG charging state pin 8.

In a loop compensation module, a COMP loop compensation pin 17 of the charging chip U1 is connected to a RC circuit, which is by the resistor R15 and a capacitor C17, to be grounded, such that stability and a transient response of the circuit are enhanced.

A VCC chip operating voltage output pin 9 of the charging chip U1 outputs the operating voltage, which is grounded through a voltage stabilizing capacitor C16.

A technical solution 6 is shown in FIGS. 6-1 to 6-5.

FIG. 6-1 shows the following.

A battery boost charging circuit of a portable fan includes: a USB interface, a boost module, a boost charging management module, a charging voltage preset module, a charging state indication module, and an over-temperature protection module.

The portable fan includes: a handheld fan, a neck fan, a waist-mounted fan, a neck fan, a head-mounted fan, a desktop fan, and a vehicle-mounted fan.

The USB interface includes an interface J1, and the boost charging management module includes a charging chip U1.

FIG. 6-2 shows the following.

In an embodiment, in the boost charging management module, the charging chip U1 integrates a power MOS transistor, a Boost synchronous boost circuit.

In the boost module circuit, an end of an inductor L1 is connected to a USB voltage VBUS, the other end of the inductor L1 is connected to a LX external inductor pin 8 of the charging chip U1. A BST bootstrap capacitor pin 7 of the charging chip U1 is connected to the pin 8 via a bootstrap capacitor C2. The bootstrap capacitor C2 increases a DC bias voltage in an amplification circuit and enhances an amplitude of an output signal. The LX external inductor pin 8 of the charging chip U1 is grounded via a resistor R1 and a capacitor C1. The resistor R1 and the capacitor C1 are connected to each other in series to form an RC circuit to filter out high-frequency signals. An end of a current limiting resistor R2 is connected to the USB voltage VBUS, and the other end of the current limiting resistor R2 is connected to a VIN power supply input pin 6 of the charging chip U1 to introduce an input voltage. The VIN power supply input pin 6 of the charging chip U1 is grounded via a capacitor C4 to filter the current. An end of a voltage stabilizing capacitor C5 is connected to the USB voltage VBUS, and the other end of the voltage stabilizing capacitor C5 is grounded. The boost charging circuit increases the voltage to charge the BAT battery via the boost module.

The battery boost charging circuit of the portable fan sets a voltage stabilizing filter circuit. An increased voltage is output from a VOUT boost output pin 2 of the charging chip U1 to output the charging voltage for charging the BAT battery. Filter capacitors C3 and C6 are connected to each other in parallel, an end of the filter capacitors is connected to the VBAT voltage, and the other end of the filter capacitors is grounded.

A Boost module is normally closed (NC) and arranged with a diode D1. A positive electrode of the diode D1 is grounded, a negative electrode of the diode D1 is connected to the VBAT.

Capacitor C7, C8, and C9 are connected to each other in parallel, an end of the capacitors is connected to a VSYS boost output intermediate node pin 1 of the charging chip U1, and the other end of the capacitors is grounded. A charging output end of the voltage stabilizing filter circuit filters the current and stabilizes the voltage.

A pin 0 of the charging chip U1 is grounded.

The boost module operates as follows.

After the MOS transistor in the charging chip U1 connected to the inductor L1 is turned on, the inductor L1 is grounded. As a current in the inductor L1 increases, the inductor L1 starts to store energy. After the MOS transistor in the charging chip U1 connected to the inductor L1 is turned off, the inductor L1 releases the stored energy. In this case, the inductor L1 and the USB voltage VBUS are connected to each other in series to cooperatively achieve a boost effect. The Boost synchronous boost circuit is used to charge the BAT battery. The MOS transistor of the charging chip U1 is controlled by an internal logic thereof. When the charging chip U1 does not operate, the MOS transistor closes chip outputting to prevent electric leakage.

FIG. 6-3 shows the following.

In an embodiment, in the charging voltage presetting module, a resistor R3 is arranged. An end of the resistor R3 is connected to a VSET voltage setting pin 4 of the charging chip U1, and the other end of the resistor R3 is grounded. The charging chip U1 determines a to-be-output charging voltage based on a detected electrical signal of a resistor R4. The battery boost charging circuit sets the charging voltage through the charging voltage preset module.

In an embodiment, in the over-temperature protection module, an end of the thermistor R4 is connected to a NTC thermistor pin 3 of the charging chip U1, and the other end of the thermistor R4 is grounded. The charging chip U1 determines whether a temperature of the battery is high or low by detecting a voltage of the thermistor R4, so as to achieve the over-temperature protection for the charging module. The over-temperature protection is provided for the battery boost charging circuit based on the over-temperature protection module.

In an embodiment, in the charging state indication module, a resistor R5 is arranged, one end of the resistor R5 is connected to a LED charging indicator pin 5 of the charging chip U1, and the other end of the resistor R5 is grounded. The LED charging indicator pin 5 of the charging chip U1 outputs a charging state signal PG. The battery boost charging circuit outputs and displays the charging state through the charging state indication module.

FIG. 6-4 shows the following.

In an embodiment, the battery boost charging circuit is arranged with a charging communication module. A pin 2 of the interface J1 is connected to a pin 5 to output the USB voltage VBUS of the boost charging circuit. A first pin 3 of the CC1 configuration channel of the interface J1 and a second pin 4 of the CC2 configuration channel of the interface J1 are respectively connected to pull-down resistors R6 and R7. The other ends of the resistors R6 and R7 are grounded. Identification functions, such as cable connection, removal and socket/plug direction, and so on, can be achieved by detecting by detecting voltage values of the CC1 and the CC2. Pins 1, 6, 7, 8 of the interface J1 are grounded. The battery boost charging circuit identifies the USB voltage through the charging communication module.

An end of a capacitor C10 and an end of a capacitor C11 are connected to the USB voltage VBUS, and the other end of the capacitor C10 and the other end of the capacitor C11 are grounded to filter the current, stabilize the voltage, and avoid spikes. The USB voltage VBUS is grounded via discharge resistor R8 to avoid unnecessary power consumption.

FIG. 6-5 shows the following.

In an embodiment, the battery boost charging circuit is further arranged with circuit transfer interfaces BD, P1, and P2 to transfer circuit signals of the portable fan.

The interface BD is connected to a dip switch, receives a P_EN enabling signal of the dip switch, and transmits the P_EN enabling signal to the master control chip of the portable fan via the interface P2 to control the portable fan to be locked or to operate.

The interface P1 receives gear adjustment signals KEY, KEY_X, and KEY_Y of the portable fan and transmits the gear adjustment signals to the master control chip of the portable fan through the interface P2 to control the portable fan to start and stop operating and control gear adjustment.

The interface P2 further receives the VBAT battery voltage, the USB voltage VBUS, and the PG signals transmitted from the charging chip U1 and transmits the VBAT battery voltage, the USB voltage VBUS, and the PG signals to the master control chip of the portable fan.

The above shows only preferred embodiments of the present disclosure and does not limit the present disclosure. Any modifications, equivalent replacements and improvements made within the spirit and principles of the present disclosure shall be included in the scope of the present disclosure.

## Claims

1. A fan, comprising:
a neck housing, comprising a connection section and two neck side sections respectively connected to two sides of the connection section; wherein the connection section and the two neck side sections cooperatively define a neck space; each of the connection section and/or at least one of the two neck side sections is arranged with a respective one airflow portion; the airflow portion is configured to blow an airflow towards the neck space.

2. The fan according to claim 1, wherein,
the airflow portion comprises a positioning protruding post, rotation air blades, and a three-phase motor drive assembly that is driveably connected to the rotation air blades;
the three-phase motor drive assembly comprises a stator and a rotor sleeving an outside of the stator; the rotor is fixedly mounted on the rotation air blades and is coaxially arranged with the rotation air blades; the stator fixedly sleeves the positioning protruding post.

3. The fan according to claim 2, wherein,
the connection section is arranged with the respective one airflow portion; the connection section defines a first air guiding cavity therein; the connection section defines a first air outlet communicated with the first air guiding cavity; the first air outlet faces towards the neck space; the positioning protruding post is received in the first air guiding cavity; the rotation air blades are rotatably received in the first air guiding cavity and configured to blow the airflow to the first air outlet;
the connection section defines a first air inlet communicated to the first air guiding cavity; the first air inlet faces towards an end of the rotation air blades; the first air outlet faces towards a side of the rotation air blades;
a plurality of first air guiding ribs are arranged in the connection section; the plurality of first air guiding ribs cooperatively define the first air guiding cavity; the first air outlet comprises a plurality of first air outlets; the plurality of first air outlets are spaced apart from each other and are located along an extension direction of the connection section; an end of the first air guiding cavity is communicated with the plurality of first air outlets.

4. The fan according to claim 2, wherein,
the rotation air blades defines a fixation hole, and an axis of the fixation hole coincides with an axis of the rotation air blades; the airflow portion further comprises a rotation shaft; a first end of the rotation shaft fixedly extends into the fixation hole; the positioning protruding post defines a positioning hole; an axis of the positioning hole coincides with an axis of the rotation shaft; a second end of the rotation shaft is rotatably received in the positioning hole.

5. The fan according to claim 4, wherein,
at least one airflow portion comprises a bearing portion; an outer ring of the bearing portion is fixed in the positioning hole, and an inner ring of the bearing portion sleeves the second end of the rotation shaft;
the bearing portion comprises a rolling bearing; the airflow portion further comprises a limiting member; the limiting member is mounted on the second end of the rotation shaft; the bearing portion is disposed between the limiting member and the first end of the rotation shaft; the bearing portion comprises a plurality of bearing portions; an inner flange is arranged on an inner wall of the positioning hole; the inner flange is disposed between two adjacent bearing portions of the plurality of bearing portions, the two adjacent bearing portions are spaced apart from each other; or
the bearing portion comprises a slide bearing; the airflow portion further comprises two sealing rings; the two sealing rings both sleeve the rotation shaft and are respectively located on two sides of the slide bearing.

6. The fan according to claim 2, wherein,
each of the two neck side sections is arranged with the respective one airflow portion; a second air guiding cavity is defined in each of the two neck side sections; the neck side section defines a second air outlet communicated with the second air guiding cavity; the second air outlet faces towards the neck space; the positioning protruding post is received in the second air guiding cavity; the rotation air blades are rotatably mounted in the second air guiding cavity and are configured to blow the airflow to the second air outlet;
the neck side section defines a second air inlet communicated to the second air guiding cavity;
the second air inlet faces an end of the rotation air blades, and the second air outlet faces a side of the rotation air blades.

7. The fan according to claim 1, further comprising a power supply portion; wherein, the power supply portion is arranged inside the housing; the power supply portion is electrically connected to the airflow portion; the housing is arranged with a charging port that is electrically connected to the power supply portion.

8. A control circuit of a neck fan, comprising:
a charging and power supply circuit, configured to be electrically connected to an external power source and a battery and receive an external voltage to charge the battery and to output a power supply voltage;
a fan drive circuit, electrically connected to the charging and power supply circuit and a fan to drive the fan to rotate; and
a master control circuit, electrically connected to the charging and power supply circuit and the fan drive circuit.

9. The control circuit according to claim 8, wherein,
the charging and power supply circuit comprises a charging port and a charging management chip; a power end of the charging port receives the external voltage and is electrically connected to a charging input pin of the charging management chip; the power end of the charging port is further electrically connected to a negative electrode of a voltage stabilizing transistor; a positive electrode of the voltage stabilizing transistor is grounded; a switch pin of the charging management chip is electrically connected to a positive electrode of the battery via a first inductor; a boost output pin of the charging management chip is configured to output the power supply voltage; a boost input pin of the charging management chip is connected to a node between the battery and the first inductor via a first connection resistor and is further grounded via a first grounding capacitor; and
a keypad input end of the charging management chip is electrically connected to the master control circuit; a first LED drive pin of the charging management chip is grounded via sequentially a first grounding resistor and a second grounding resistor; a second LED drive pin of the charging management chip is connected to the battery via a second connection resistor; a first indicator light pin of the master control circuit is grounded via a first indicator branch; a second indicator branch is grounded via a second indicator light branch; each of the first indicator branch and the second indicator branch comprises a current limiting resistor and an indicator that is in series connected to the current limiting resistor.

10. The control circuit according to claim 8, further comprising a refrigeration control circuit, wherein,
the refrigeration control circuit is electrically connected to a refrigeration member and the charging and power supply circuit to drive the refrigeration member to generate coldness; the refrigeration control circuit comprises a first control switch; a first conductive end of the first control switch is configured to receive, via the refrigeration member, an output voltage from the battery or receive the power supply voltage; a second conductive end of the first control switch is grounded; and
the master control circuit is electrically connected to the refrigeration control circuit; the master control circuit is configured to output a first pulse width control signal to control the first control switch to be conducted or disconnected, so as to further control the refrigeration member to be switched on and switched off intermittently.

11. The control circuit according to claim 8, further comprising a second control switch, wherein,
a first conductive end of the second control switch is electrically connected to the battery to receive an output voltage from the battery; a control end of the second control switch is configured to receive the external voltage and grounded; a second conductive end of the second control switch is electrically connected to the fan drive circuit; the second control switch is disconnected when receiving the external voltage and is conducted when receiving no external voltage.

12. The control circuit according to claim 11, wherein,
the control end of the control switch is grounded via a third grounding resistor and is electrically connected to the second conductive end of the control switch and the fan drive circuit via a first diode; the second control switch is a P-Metal-Oxide-Semiconductor (PMOS) field effect transistor;
a control end of the first control switch is electrically connected to a first pulse width signal output end of the master control circuit via a third connection resistor; a node between the control end of the first control switch and the third connection resistor is grounded via a fourth connection resistor; the first control switch is a N-Metal-Oxide-Semiconductor (NMOS) field effect transistor; the refrigeration member further receives the output voltage of the battery or the power supply voltage via a fifth connection resistor.

13. The control circuit according to claim 8, wherein,
the control circuit further comprises an encoder, the encoder is connected to the positive electrode of the battery and is grounded; two output ends of the encoder are connected to the master control circuit; the encoder has an infinite adjustment knob to be operated by a user; the infinite adjustment knob is configured to be operated to enable the two output ends of the encoder to output a plurality of digital signals; the master control circuit is configured to control, based on the plurality of digital signals, the first control switch to control a refrigeration intensity of the refrigeration member or to control, based on the plurality of digital signals, the fan drive circuit to control a rotation speed of the fan.

14. The control circuit according to claim 8, wherein,
the fan drive circuit comprises a second inductor, a third control switch, a second diode, and a boost feedback branch; an end of the second inductor is electrically connected to the charging and power supply circuit to receive the external voltage or receive the output voltage of the battery; the other end of the second inductor is connected to the fan assembly via the second diode; a first conductive end of the third control switch is connected to a node between the second inductor and the second diode; a second conductive end of the third control switch is grounded; a control end of the third control switch is electrically connected to the master control circuit to receive a second pulse width control signal output of from the master control circuit; an end of the boost feedback branch is connected to a node between the second diode and the fan; the other end of the boost feedback branch is grounded; the boost feedback branch comprises a first voltage divider resistor and a second voltage divider resistor that is connected in series to the first voltage divider resistor; a node between the first voltage divider resistor and the second voltage divider resistor is connected to the master control circuit via a third voltage divider resistor; a node between the third voltage divider and the master control circuit is grounded via a second grounding capacitor.

15. The control circuit according to claim 8, wherein,
the fan drive circuit further comprises a fourth control switch, a third diode, a first feedback resistor, a second feedback resistor; a negative electrode of the third diode is connected to a positive electrode of the fan; a negative electrode of the fan is connected to a positive electrode of the third diode and a first conductive end of the fourth control switch; a control end of the fourth control switch is electrically connected to a fan enabling end of the master control circuit; a second conductive end of the fourth control switch is grounded via the first feedback resistor; a node between the second conductive end of the fourth control switch and the first feedback resistor is electrically connected to a load feedback end of the master control circuit via the second feedback resistor; a node between the second feedback resistor and the master control circuit is grounded via a third grounding capacitor.

16. A fan drive control circuit of a portable fan, comprising:
a battery power supply, a voltage stabilizing unit, a master control unit, a motor, a USB access circuit, an analog-to-digital converter (ADC) power supply circuit, and a display unit;
wherein the fan drive control circuit further comprises at least one of: a motor drive control unit, a motor drive circuit, a rotor position detection circuit.

17. The fan drive control circuit according to claim 16, wherein,
a permanent magnet is arranged on a rotor of the motor; a first winding, a second winding, and a third winding are connected to each other to form a Y shape and are arranged on a stator of the motor; a MOS transistor switch circuit of the fan drive control circuit is connected to the first winding, the second winding, and the third winding of the motor; the motor drive control unit is configured to control magnitudes of currents, current flowing directions, and a phase relationship of currents flowing through the first winding, the second winding, and the third winding; and
in a motor drive circuit, an end of a first MOS transistor switch is connected to a power supply voltage, and the other end of the first MOS transistor switch is connected to the second winding; conduction of the first MOS transistor switch is controlled by a second MOS transistor switch; an end of the second MOS transistor switch is connected, via a first resistor, to the power supply voltage; and the other end of the second MOS transistor switch is grounded; the second MOS transistor switch is configured to receive a pulse modulation control signal of the motor drive control unit.

18. The fan drive control circuit according to claim 17, wherein,
in the motor drive circuit, an end of a third MOS transistor switch is connected to the first winding; the other end of the third MOS transistor switch is grounded via a current sampling resistor; the third MOS transistor switch is configured to receive the pulse modulation control signal from the motor drive control unit.

19. The fan drive control circuit according to claim 18, wherein,
the MOS transistor switch is arranged with a reverse diode;
the first MOS transistor switch is a P-type MOS transistor, and each of the second MOS transistor switch and the third MOS transistor switch is a N-type MOS transistor; and
a second resistor is connected to a drain and a source of the second MOS transistor switch, and a third resistor is connected to a drain and a source of the third MOS transistor switch.

20. The fan drive control circuit according to claim 19, wherein,
in the motor drive circuit, a fourth MOS transistor switch, a fifth MOS transistor switch, and a sixth MOS transistor switch and a fourth resistor, a fifth resistor, and a sixth resistor cooperatively form a MOS transistor switch circuit to control a current to flow into or out of the second winding;
a seventh MOS transistor switch, an eighth MOS transistor switch, and a ninth MOS transistor switch and a seventh resistor, an eighth resistor, and a ninth resistor cooperatively form another MOS transistor switch circuit to control a current to flow into or out of the third winding;
the motor drive control unit comprises a motor drive chip, the motor drive chip is configured to output a motor drive signal to a gate of the MOS transistor of the motor drive circuit;
a control chip of the master control unit is connected to the USB access circuit, the battery voltage detection ADC circuit, and the display unit.
